# EUROPÄISCHE PATENTANMELDUNG

(11) **EP 4 024 646 A1**
(43) Veröffentlichungstag der Anmeldung: **06.07.2022**
(21) Anmeldenummer: 20217862.0
(22) Anmeldetag: 30.12.2020
(51) Int. Cl.: H02J 3/38, F03D 7/02, F03D 9/25

(54) **VERFAHREN ZUM EINSPEISEN ELEKTRISCHER LEISTUNG IN EIN ELEKTRISCHES VERSORGUNGSNETZ**

(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Einspeisen elektrischer Leistung in ein elektrisches Versorgungsnetz mittels eines umrichtergeführten Einspeisers (100, 112), der mittels wenigstens eines Umrichters elektrische Leistung in das elektrische Versorgungsnetz einspeist, wobei der umrichtergeführte Einspeiser an einem Netzanschlusspunkt in einen lokalen Netzabschnitt des elektrischen Versorgungsnetzes einspeist, das elektrische Versorgungsnetz den umrichtergeführten Einspeiser und weitere Einspeiser aufweist, zum Einspeisen elektrischer Leistung, die als Einspeiseleistung bezeichnet wird, und Verbraucher zum Verbrauchen elektrischer Leistung, die als Verbrauchsleistung bezeichnet wird, der lokale Netzabschnitt eine hohe Umrichterpenetration aufweist, wobei eine Umrichterpenetration ein Verhältnis mittels Umrichter einspeisbarer Leistung zu insgesamt durch alle Einspeiser einspeisbarer Leistung angibt, und eine hohe Umrichterpenetration durch einen Wert von wenigstens 50% definiert ist, und das Einspeisen der elektrischen Leistung mittels einer Einspeiseregelung erfolgt, die das Einspeisen der elektrischen Leistung in Abhängigkeit von einem Netzzustand des elektrischen Versorgungsnetzes steuert, wobei die Einspeiseregelung ein Regelungsverhalten mit einem Ein-/ Ausgangsverhalten aufweist, der lokale Netzabschnitt durch eine Netzcharakteristik charakterisiert werden kann, und die Netzcharakteristik von wenigstens einer Eigenschaft des lokalen Netzabschnitts abhängt und zusätzlich von wenigstens einer Eigenschaft eines weiteren mit dem lokalen Netzabschnitt verbundenen Netzabschnitts des elektrischen Versorgungsnetzes abhängt, oder davon abhängt, dass kein weiterer Netzabschnitt vorhanden ist, und das Regelungsverhalten in Abhängigkeit von der Netzcharakteristik des lokalen Netzabschnitts ausgewählt oder eingestellt wird.

## Beschreibung

Die vorliegende Erfindung betrifft ein Verfahren zum Einspeisen elektrischer Leistung in ein elektrisches Versorgungsnetz mittels eines umrichtergeführten Einspeisers. Die vorliegende Erfindung betrifft auch ein Windenergiesystem mit wenigstens einer Windenergieanlage zum Einspeisen elektrischer Leistung in ein elektrisches Versorgungsnetz.

Elektrische Versorgungsnetze werden heutzutage, jedenfalls in einigen Regionen, zunehmend durch umrichtergeführte Einspeiser beeinflusst. Der Anteil konventioneller Einspeiser, insbesondere Großkraftwerke, die mittels direkt gekoppelter Synchrongeneratoren in das elektrische Versorgungsnetz einspeisen, geht zurück.

Vor diesem Hintergrund sind besonders für die umrichtergeführten Einspeiser an diese Situation angepasste Strategien entwickelt worden, einschließlich FRT-Strategien, die das Durchsteuern eines Netzfehlers betreffen (FRT = Fault Ride Through). Heutige FRT-Strategien sind häufig für Netze entwickelt worden, in denen sowohl lokal (elektrisch nah) als auch global eine Mindestzahl von Synchronmaschinen vorhanden sind und in welchen sich nicht wesentlich die Bedingungen ändern. Heutzutage kommt es in vielen Netzabschnitten und sogar in einigen Netzen, also elektrischen Versorgungsnetzen insgesamt, zu Situationen, in denen die vorstehend genannte Annahme nicht mehr gegeben ist.

Entsprechend entwickelte Strategien können daher möglicherweise nicht mehr geeignet sein und gegebenenfalls zu Problemen führen.

Der vorliegenden Erfindung liegt somit die Aufgabe zugrunde, zumindest eines der genannten Probleme zu adressieren. Insbesondere soll eine Lösung vorgeschlagen werden, bei der Einspeisestrategien möglichst geeignet an das elektrische Versorgungsnetz oder den betreffenden Netzabschnitt des elektrischen Versorgungsnetzes angepasst sind. Zumindest soll zu bisher bekannten Lösungen eine alternative Lösung vorgeschlagen werden.

Erfindungsgemäß wird ein Verfahren gemäß Anspruch 1 vorgeschlagen.

Somit ist ein Verfahren zum Einspeisen elektrischer Leistung in ein elektrisches Versorgungsnetz mittels eines umrichtergeführten Einspeisers vorgesehen, der mittels wenigstens eines Umrichters elektrische Leistung in das elektrische Versorgungsnetz einspeist. Der umrichtergeführte Einspeiser kann besonders als Windenergieanlage oder als Windpark mit mehreren Windenergieanlagen ausgebildet sein. Solche Windenergieanlagen erzeugen elektrische Leistung mittels eines Generators und die so erzeugte elektrische Leistung wird dann mittels wenigstens eines Umrichters in das elektrische Versorgungsnetz eingespeist. Der wenigstens eine Umrichter kann dazu Betrag und Phase eines eingespeisten Stroms steuern. Häufig können mehrere Umrichter, was auch Wechselrichter beinhaltet, ausgangsseitig parallel geschaltet sein. Das kommt besonders für einen Windpark in Betracht, aber auch eine einzelne Windenergieanlage kann mehrere Umrichter bzw. Wechselrichter in Parallelschaltung verwenden. Anstelle einer Windenergieanlage oder eines Windparks kommt als umrichtergeführter Einspeiser auch eine Photovoltaikanlage in Betracht, um ein weiteres Beispiel zu nennen.

Es ist weiter vorgesehen, dass der umrichtergeführte Einspeiser an einem Netzanschlusspunkt in einen lokalen Netzabschnitt des elektrischen Versorgungsnetzes einspeist. Das elektrische Versorgungsnetz kann somit in mehrere Netzabschnitte unterteilt sein, und einer dieser Netzabschnitte ist dem umrichtergeführten Einspeiser zugeordnet und bildet somit für den umrichtergeführten Einspeiser einen lokalen Netzabschnitt. In diesen speist der umrichtergeführte Einspeiser ein.

Weiter ist vorgesehen, dass das elektrische Versorgungsnetz, das somit den umrichtergeführten Einspeiser aufweist, auch weitere Einspeiser aufweist, die jeweils zum Einspeisen elektrischer Leistung vorbereitet sind. Die elektrische Leistung, die all diese Einspeiser in das elektrische Versorgungsnetz einspeisen, wird hier als Einspeiseleistung bezeichnet.

Weiterhin ist vorgesehen, dass das elektrische Versorgungsnetz Verbraucher zum Verbrauchen elektrischer Leistung aufweist. Diese zum Verbrauch vorgesehene elektrische Leistung, die dann also auch verbraucht wird, wird als Verbrauchsleistung bezeichnet. Solche Verbraucher können beispielsweise Fabriken sein, oder Elektrotankstellen zum Laden von Elektrofahrzeugen, oder eine Ortschaft oder Stadt kann auch als elektrischer Verbraucher angesehen werden, auch wenn sie sich aus vielen einzelnen Verbrauchern zusammensetzt. Beispielsweise kann auch eine Gießerei ein Verbraucher sein, nämlich ein industrieller Verbraucher.

Es wird nun weiter vorgeschlagen, dass der lokale Netzabschnitt eine hohe Umrichterpenetration aufweist. Eine Umrichterpenetration gibt ein Verhältnis mittels Umrichter einspeisbarer Leistung zu insgesamt durch alle Einspeiser einspeisbarer Leistung an. Das bezieht sich natürlich auf den betrachteten Netzabschnitt, bezeichnet also das Verhältnis mittels Umrichter in dem betrachteten Netzabschnitt einspeisbare Leistung zu insgesamt durch alle Einspeiser des betrachteten Netzabschnitts in diesen einspeisbare Leistung. Insoweit wird hier auf die mögliche Einspeiseleistung jeweils abgestellt. Die mittels Umrichter einspeisbare Leistung ist somit die Leistung, die der umrichtergeführte Einspeiser und weitere umrichtergeführte Einspeiser in dem betrachteten Netzabschnitt einspeisen könnten, wenn sie jeweils mit Nennleistung einspeisen. Ob sie aktuell Nennleistung einspeisen oder weniger, ist für diese Größe der Umrichterpenetration nicht von Relevanz. Allerdings werden nur umrichtergeführte Einspeiser betrachtet, die nicht von dem elektrischen Versorgungsnetz getrennt sind. Die Umrichterpenetration eines Netzabschnitts kann somit auch bezeichnet werden als das Verhältnis der Summe der Nennleistungen aller umrichtergeführten Einspeiser dieses Netzabschnitts zu der Summe der Nennleistungen aller Einspeiser dieses Netzabschnitts, wobei nur Einspeiser betrachtet werden, die nicht vom Netz getrennt sind.

Hier wird für den lokalen Netzabschnitt eine hohe Umrichterpenetration zugrunde gelegt und eine hohe Umrichterpenetration ist durch einen Wert von wenigstens 50 % definiert. Wenigstens die Hälfte der einspeisbaren Gesamtnennleistung dieses lokalen Netzabschnitts muss somit umrichtergeführten Einspeisern zugeordnet werden. Es wurde erkannt, dass ein solcher lokaler Netzabschnitt, der eine hohe Umrichterpenetration aufweist, eine besondere Berücksichtigung erfahren sollte, was nachfolgend noch im Einzelnen erläutert werden wird.

Es wird nun weiter vorgeschlagen, dass das Einspeisen der elektrischen Leistung mittels einer Einspeiseregelung erfolgt, die das Einspeisen der elektrischen Leistung in Abhängigkeit von einem Netzzustand des elektrischen Versorgungsnetzes steuert. Insbesondere kommt die Netzspannung, die Netzfrequenz und etwaige Netzfehler, einschließlich ob überhaupt Netzfehler vorliegen, als Netzzustand in Betracht. Solche Netzzustände berücksichtigt die Einspeiseregelung beim Steuern des Einspeisens.

Die Einspeiseregelung weist dabei ein Regelverhalten mit einem Ein-/ Ausgangsverhalten auf. Ein solches Ein-/Ausgangsverhalten kann durch eine lineare oder nichtlineare Übertragungsfunktion gekennzeichnet sein. Besonders kann eine solche Einspeiseregelung eine Verstärkung aufweisen. Beispielsweise kann die Einspeiseregelung eine einzustellende Leistungsveränderung für die einzuspeisende Leistung in Abhängigkeit von einer erfassten Spannungsabweichung der Netzspannung von einem Referenzwert aufweisen. In diesem Beispiel ist die Spannungsabweichung die Eingangsgröße der Einspeiseregelung und die resultierende Leistungsveränderung die Ausgangsgröße der Einspeiseregelung. Das Ein-/Ausgangsverhalten kann dann beispielsweise durch eine Sprungantwort gekennzeichnet sein. Die Sprungantwort bezeichnet den zeitlichen Verlauf der Ausgangsgröße als Antwort auf einen Sprung der Eingangsgröße. Die Einspeiseregelung kann aber auch weitere Funktionen beinhalten, wie das Umschalten einer Funktionalität wie das Umschalten von einer stromprägenden Einspeisung zu einer spannungsprägenden Einspeisung.

Der lokale Netzabschnitt kann durch eine Netzcharakteristik charakterisiert werden, und die Netzcharakteristik hängt von wenigstens einer Eigenschaft des lokalen Netzabschnitts ab und zusätzlich von wenigstens einer Eigenschaft eines weiteren mit dem lokalen Netzabschnitt verbundenen Netzabschnitts des elektrischen Versorgungsnetzes, oder die Netzcharakteristik hängt von wenigstens einer Eigenschaft des lokalen Netzabschnitts ab und zusätzlich davon, dass kein weiterer Netzabschnitt vorhanden ist. In diesem zweiten Fall bildet der lokale Netzabschnitt ein Inselnetz.

Es wird somit vorgeschlagen, den lokalen Netzabschnitt zu charakterisieren und dabei seine Ankopplung zu etwaigen Nachbarnetzabschnitten, mit denen er nämlich verbunden ist, oder zumindest zu einem weiteren Nachbarnetzabschnitt zu berücksichtigen. Es wurde besonders erkannt, dass beispielsweise eine Umrichterpenetration des lokalen Netzabschnitts, die eine Eigenschaft des lokalen Netzabschnitts bilden kann, zu unterschiedlichen Netzcharakteristika des lokalen Netzabschnitts führen kann, je nachdem, was für ein benachbarter Netzabschnitt vorliegt. Häufig ist die Kopplung zwischen zwei benachbarten Netzabschnitten sehr stark und das kann besonders bedeuten, dass der benachbarte Netzabschnitt den lokalen Netzabschnitt gegebenenfalls stützen kann. Es kann aber auch bedeuten, dass der lokale Netzabschnitt etwaige Probleme oder andere Verhaltensweisen des benachbarten Netzabschnitts mit berücksichtigen muss. Details dazu werden unten noch weiter erläutert.

Es wird nun vorgeschlagen, dass das Regelungsverhalten in Abhängigkeit von der Netzcharakteristik des lokalen Netzabschnitts eingestellt wird. Das Regelungsverhalten berücksichtigt somit also wenigstens eine Eigenschaft des lokalen Netzabschnitts und wenigstens eine Eigenschaft des Weiteren mit dem lokalen Netzabschnitt verbundenen Netzabschnitts. Dabei werden diese Eigenschaften aber nicht einzeln betrachtet, sondern es wird betrachtet, wie weit sie den lokalen Netzabschnitt bestimmen. So wurde beispielsweise erkannt, dass ein lokaler Netzabschnitt mit einer hohen Umrichterpenetration, der aber eingebettet ist in Netzabschnitte, in denen Großkraftwerke dominieren, sich anders verhält und daher anders zu regeln ist, als wenn er in Netzabschnitte eingebettet wäre, die ihrerseits eine hohe Umrichterpenetration aufweisen.

Gemäß einem Aspekt kann für eine Charakterisierung des lokalen Netzabschnitts zwischen Netzcharakteristika aus der folgenden Liste unterschieden werden.

Der lokale Netzabschnitt kann als Inselnetz charakterisiert werden. Als Inselnetz wird er charakterisiert, wenn der lokale Netzabschnitt dem elektrischen Versorgungsnetz entspricht, das elektrische Versorgungsnetz ein in sich abgeschlossenes Netz bildet, die Summe der Verbrauchsleistungen aller an das Versorgungsnetz angeschlossenen Verbraucher einen Wert von 5 GW nicht überschreitet. Die Umrichterpenetration kann bis zu 100 % betragen. Diese Kriterien kennzeichnen somit den lokalen Netzabschnitt, wenn er als Inselnetz charakterisiert werden kann.

Eine solche Charakterisierung berücksichtigt dabei auch, dass der Netzabschnitt und damit das Inselnetz insgesamt mit einer maximalen Verbrauchsleistung von 5 GW vergleichsweise klein ist. In einem solchen Inselnetz können somit Leistungsabweichungen einen großen Effekt haben. Außerdem kann ein solches Inselnetz auch ohne Weiteres durch umrichtergeführte Einspeiser betrieben werden. Das hier betrachtete Inselnetz weist also eine Umrichterpenetration von 50 bis 100 % auf. Im Falle einer Umrichterpenetration von 100 % wird dieses Inselnetz somit vollständig von umrichtergeführten Einspeisern gespeist und damit betrieben.

Das elektrische Versorgungsnetz auf den Färöer-Inseln ist ein Beispiel für ein solches Inselnetz, also für einen lokalen Netzabschnitt, der als Inselnetz charakterisiert werden kann. Dort kann der Anteil eingespeister elektrischer Leistung im Vergleich zur insgesamt eingespeisten elektrischen Leistung bis 90 % betragen. Das elektrische Versorgungsnetz auf den Färöer-Inseln ist somit auch geografisch ein Inselnetz, da die Färöer-Inseln auch geografisch eine Inselgruppe sind, ein Inselnetz muss aber nicht unbedingt auf einer Insel oder Inselgruppe existieren.

Ein weiteres Beispiel ist das elektrische Versorgungsnetz auf der Karibikinsel Sint Eustatius, das einen Anteil regenerativer Energiequellen bei der Leistungseinspeisung von 100 % erreichen kann.

Hervorzuhebende Eigenschaften solcher Inselnetze, seien sie nun auf einer geografischen Insel oder aus anderen Gründen isoliert, umfassen die Eigenschaft, dass ein abgeschlossenes kleines Netz vorliegt. Es weist häufig Sammelschienenkraftwerke auf, bei denen elektrische Leistung zur Einspeisung auf einer Sammelschiene gebündelt wird. Es kommt auch eine verteilte Einspeisung in Betracht. Für die Obergrenze der Summe der Verbrauchsleistungen wurden oben 5 GW angegeben, üblicherweise beträgt die maximale Netzlast aber meist nicht mehr als 1 GW.

Eine weitere Eigenschaft ist, dass die Frequenz weich ist. Sie kann also leichten Schwankungen unterliegen, die nicht unbedingt auf ein unzulässiges Leistungsungleichgewicht zurückgeführt werden müssen. Vielmehr ist die Schwungmasse in diesen Netzen im Verhältnis zu den Netzstörungen klein und es werden größere Frequenzschwankungen in der Betriebsführung hingenommen.

Meist ist ein solches Netz auch dadurch gekennzeichnet, dass Spannungswinkeldifferenzen klein sind. Der Phasenwinkel der Spannung unterscheidet sich also im gesamten Netz wenig. Als kleine Spannungswinkeldifferenzen werden hier Differenzen von maximal 60°, insbesondere maximal 45° bezeichnet.

Ein solches Inselnetz weist auch kein klassisches Übertragungsnetz auf. Es können übergeordnete Netzebenen vorkommen, die aber entsprechend klein sind. Insbesondere findet sich keine Höchstspannungsebene, oftmals auch keine Hochspannungsebene.

Eine weitere Eigenschaft kann darin bestehen, dass Energieversorger und Netzbetreiber nicht getrennt sind. Damit können auch entsprechende Steuer- und Regeleinheiten technisch kombiniert sein, insbesondere an einem Ort und/oder in einem Gebäude oder anderem Gehäuse untergebracht sein. Insbesondere sind Steuereinheiten zum Steuern der Leistungseinspeisung und zum Steuern der Leistungsübertragung und/oder zum Steuern von Verbrauchern gut aufeinander abgestimmt.

Eine weitere Eigenschaft ist, dass Netzpendelungen nicht oder nicht nennenswert auftreten können. Das liegt besonders auch an der geringen Größe eines solchen Inselnetzes. Der Anteil durch regenerative Energiequellen eingespeister Leistung kann zwischen 0 % und 100 % schwanken.

Dazu wurde besonders erkannt, dass sich die folgenden Herausforderungen oder Anforderungen ergeben können. Es können sehr kleine Schwungmassen vorhanden sein, gegebenenfalls gar keine Schwungmassen.

Eine weitere Eigenschaft eines Inselnetzes ist, dass die direkte Kopplung zwischen Wirkleistung und Frequenz sowie Blindleistung und Spannung schwächer ist, bzw. auch die Leistungsaufnahme stärker von der Spannung und der Blindleistungsbedarf stärker von der Frequenz abhängig sein können. Die Frequenz wird also weniger durch Leistungsungleichgewichte bestimmt, sondern auch durch die Blindleistungsbilanz. Die Netzspannung ist nicht nur durch das Blindleistungsgleichgewicht bestimmt, sondern auch von der Wirkleistungsbilanz und umgekehrt. Eine weitere Eigenschaft solcher Inselnetze ist ein starker Selbstregeleffekt. Das bedeutet besonders, dass eine schwankende Frequenz zu einer schwankenden Verbrauchsleistung führt. Eine Veränderung der Spannung kann ebenfalls zu einer veränderten Leistungsentnahme führen.

Der lokale Netzabschnitt kann auch als Abschnitt mit hoher Umrichterpenetration verbunden mit einem starken Netz charakterisiert werden. Diese Charakterisierung wird vorgesehen, wenn der lokale Netzabschnitt mit einem übergeordneten Netzabschnitt verbunden ist, die Summe der Verbrauchsleistungen aller an das elektrische Versorgungsnetz angeschlossenen Verbraucher einen Wert von 5 GW überschreitet, der übergeordnete Netzabschnitt Teil des elektrischen Versorgungsnetzes ist und der übergeordnete Netzabschnitt einen hohen Schwungmassenindex aufweist, wobei ein Schwungmassenindex eines Netzabschnitts ein Verhältnis angibt zwischen elektrischer Leistung, die durch direkt gekoppelte Synchrongeneratoren in den Netzabschnitt einspeisbar ist, zu insgesamt in den Netzabschnitt einspeisbarer Leistung, und ein hoher Schwungmassenindex durch einen Wert definiert wird, der oberhalb eines vorgebbaren Schwungmassenreferenzindexes liegt.

Ein übergeordneter Netzabschnitt ist besonders ein solcher, der gegenüber dem lokalen Netzabschnitt eine höhere Spannungsebene aufweist. Beispielsweise kann der lokale Netzabschnitt eine Mittelspannung aufweisen, die besonders im Bereich von 1 kV bis 50 kV liegt, während der übergeordnete Netzabschnitt eine Hochspannung aufweisen kann, die beispielsweise 110 kV betragen kann. Ein übergeordneter Netzabschnitt ist besonders einer, der mehrere Netzabschnitte verbindet, wobei diese Netzabschnitte, die er verbindet, dann ihm gegenüber entsprechend untergeordnete Netzabschnitte sind. So kann der übergeordnete Netzabschnitt den lokalen Netzabschnitt mit einem weiteren Netzabschnitt verbinden. Außerdem oder alternativ kann ein übergeordneter Netzabschnitt einer sein, der im Falle eines Netzwiederaufbaus gegenüber dem lokalen Netzabschnitt Vorrang hat. Der übergeordnete Netzabschnitt kann also in einer Hierarchie über dem lokalen Netzabschnitt stehen. Ein übergeordneter Netzabschnitt kann außerdem oder alternativ dadurch gekennzeichnet sein, dass die einspeisbare Leistung aller seiner Einspeiser größer ist als die einspeisbare Leistung aller Einspeiser des lokalen Netzabschnitts.

Für einen solchen übergeordneten Netzabschnitt ist für diese Charakterisierung somit ein hoher Schwungmassenindex vorgesehen. Der Schwungmassenindex kann beispielsweise wenigstens 50 % betragen, insbesondere wenigstens 70 % betragen, weiter bevorzugt wenigstens 80 % betragen. In diesem Fall sind somit konventionelle Einspeiser in diesem übergeordneten Netzabschnitt dominant und dadurch bildet der übergeordnete Netzabschnitt ein starkes Netz. Es liegt dann also ein lokaler Netzabschnitt mit hoher Umrichterpenetration vor, der einem starken Netzabschnitt zugeordnet und untergeordnet ist. Das kann bei der Regelung berücksichtigt werden, insbesondere derart, dass auf ein stabiles Verhalten dieses übergeordneten Netzabschnitts gebaut werden kann.

Insbesondere wird vorgesehen, dass der lokale Netzabschnitt als Abschnitt mit hoher Umrichterpenetration verbunden mit einem starken Netz charakterisiert wird, wenn die insgesamt in den übergeordneten Netzabschnitt einspeisbare Leistung wenigstens den dreifachen, insbesondere wenigstens den vierfachen Wert der in den lokalen Netzabschnitt insgesamt einspeisbaren Leistung aufweist.

Ein Beispiel für einen lokalen Netzabschnitt, der als Abschnitt mit hoher Umrichterpenetration verbunden mit einem starken Netz charakterisiert werden kann, kann die 50 Hertz-Regelzone in Deutschland angesehen werden. Hier kann der Anteil durch erneuerbare Energiequellen eingespeister Leistung zeitweise sogar über 100 % betragen. Beispielsweise sind schon Werte von 160 % aufgetreten. Das bedeutet, dass in dem Fall Leistung regenerativer Energiequellen von diesem lokalen Netzabschnitt an einen übergeordneten Netzabschnitt abgegeben, also exportiert wird. Der übergeordnete Netzabschnitt kann ein Teil des Übertragungsnetzes des europäischen Verbundnetzes sein. Es können regenerative Energiequellen somit über 100 % Leistung erzeugen und damit Leistung in das übrige starke Netz exportieren.

Der übergeordnete Netzabschnitt kann auch ein vermaschtes Netz sein, das nämlich mit vielen weiteren lokalen und anderen Netzabschnitten verbunden ist, wie das für das Übertragungsnetz des europäischen Verbundnetzes der Fall ist.

Eigenschaften eines solchen lokalen Netzabschnitts, der als Abschnitt mit hoher Umrichterpenetration verbunden mit einem starken Netz charakterisiert werden kann, sind somit, dass ein hoher Anteil an Schwungmassen vorhanden ist. Das kann auch als global hohe Schwungmasse bezeichnet werden, die vorhanden ist. Eine solche hohe Schwungmasse bzw. ein solcher hoher Schwungmassenanteil kann besonders für eine stabile Netzfrequenz sorgen. Gleichzeitig führt dieser hohe Schwungmassenanteil dazu, dass eine Frequenzänderung einem deutlichen Leistungsungleichgewicht zugeordnet werden kann.

Eine weitere Eigenschaft eines solchen lokalen Netzabschnitts ist, dass hohe Leistungstransfers auftreten können. Dazu gehört die bereits angesprochene Leistungsübertragung regenerativer Energiequellen in dem lokalen Netzabschnitt an den übergeordneten Netzabschnitt.

Es kann auch eine zeitweise hohe Überspeisung einzelner Regionen innerhalb des lokalen Netzabschnitts auftreten. Das bezeichnet eine Situation, bei der mehr elektrische Leistung eingespeist als verbraucht wird. Eine solche hohe Überspeisung kann dann zu einem Leistungstransfer führen. Es kommt aber auch in Betracht, dass einer Überspeisung durch entsprechende Einspeisereduzierung entgegengewirkt wird.

Eine weitere Eigenschaft ist, dass ein Anteil durch erneuerbare Energiequellen eingespeister Leistung stark schwanken kann, insbesondere im Bereich zwischen 10 % und 200 %, insbesondere zwischen 10 % und 160 %. Das bezeichnet die durch erneuerbare Energiequellen eingespeiste Leistung zu insgesamt im Netzabschnitt verbrauchter Leistung. Trotz des genannten möglichen niedrigen Wertes von 10% für einen Anteil durch erneuerbare Energiequellen eingespeister Leistung, bezogen auf die verbrauchte Leistung, bleibt die Umrichterpenetration gleichwohl hoch, denn diese bezieht sich auf die einspeisbare Leistung, also darauf, mit wie viel Nennleistung umrichtergeführte Einspeiser angeschlossen sind, im Vergleich zu der gesamten angeschlossenen Nennleistung.

Hier wurde besonders auch erkannt, dass für einen solchen lokalen Netzabschnitt besondere Herausforderungen und Anforderungen entstehen können. Hier wurde besonders erkannt, dass im Fall einer Netzauftrennung sehr hohe Leistungsüberschüsse vorhanden sein können. Dies kann besonders eine schnelle Leistungsreduktion notwendig machen, um eine überspeiste Zone bei Netzauftrennung zu fangen. Hierbei kann die überspeiste Zone auch einen Teilabschnitt des lokalen Netzabschnitts bilden. Solange der lokale Netzabschnitt mit dem übergeordneten Netzabschnitt verbunden ist, stellt der Leistungsexport und damit auch die Situation einer überspeisten Zone kein Problem dar, sofern dieser Überschuss nicht zu groß wird. Er kann sogar gewünscht sein, um auch andere Teile des elektrischen Versorgungsnetzes mit regenerativer Energie zu versorgen. Ergibt sich aber eine Netztrennung, muss die eingespeiste Leistung im Fall einer Überspeisung und/oder im Falle eines Exports entsprechend schnell reduziert werden. Das kann der Einspeiseregler berücksichtigen.

Alternativ oder zusätzlich kann für den lokalen Netzabschnitt, der als Abschnitt mit hoher Umrichterpenetration verbunden mit einem starken Netz charakterisiert werden kann, vorgesehen sein, dass der übergeordnete Netzabschnitt statt durch den Schwungmassenindex, oder zusätzlich dazu, durch eine große Leistungsaustauschkapazität zum lokalen Netzabschnitt gekennzeichnet ist. Demnach weist der übergeordnete Netzabschnitt eine Leistungsaustauschkapazität zum lokalen Netzabschnitt auf, wobei die Leistungsaustauschkapazität ein Verhältnis zwischen maximal zwischen dem übergeordneten Netzabschnitt und dem lokalen Netzabschnitt austauschbarer Leistung in Bezug auf durch alle Einspeiser des lokalen Netzabschnitts einspeisbarer Leistung bezeichnet, und wenigstens 50 % beträgt. Der übergeordnete Netzabschnitt kann also wenigstens 50 % der von dem lokalen Netzabschnitt selbst erzeugbaren Leistung aufnehmen oder dem lokalen Netzabschnitt bereitstellen. Vorzugsweise weist die Leistungsaustauschkapazität wenigstens den Wert 100 % auf. In diesem Fall ist der übergeordnete Netzabschnitt so stark, dass er den lokalen Netzabschnitt vollständig stützen könnte. Das betrifft sowohl die Versorgung des lokalen Netzabschnitts als auch die Abnahme der in dem lokalen Netzabschnitt erzeugten Leistung.

Die Leistungsaustauschkapazität kann besonders durch entsprechende Kopplungsstellen zwischen dem lokalen Netzabschnitt und dem übergeordneten Netzabschnitt gewährleistet werden, über die nämlich diese beiden Netzabschnitte miteinander verbunden sind. Um diese hohe Leistungsaustauschkapazität zu erreichen, können dafür mehrere Kopplungsstellen zwischen den beiden Netzabschnitten vorgesehen sein.

Die Leistungsaustauschkapazität beinhaltet aber auch, dass der übergeordnete Netzabschnitt ausreichend Leistung erzeugen oder abnehmen kann, zumindest weiter übertragen kann. Es muss also auch gewährleistet werden, dass die zwischen den beiden Netzabschnitten übertragene Leistung von dem übergeordneten Netzabschnitt auch aufgenommen bzw. bereitgestellt werden kann.

Der lokale Netzabschnitt kann auch als Abschnitt mit lokal hoher Umrichterpenetration verbunden mit einem normalen Netz charakterisiert werden. Eine solche Charakterisierung liegt dann vor, wenn die umrichtergeführten Einspeiser des lokalen Netzabschnitts mit einem mittleren Kurzschlussstromverhältnis an den lokalen Netzabschnitt angeschlossen sind, das einen Wert von maximal 4, insbesondere maximal 2 aufweist, wenn außerdem der lokale Netzabschnitt mit einem übergeordneten Netzabschnitt verbunden ist, die Summe der Verbrauchsleistungen aller an das elektrische Versorgungsnetz angeschlossenen Verbraucher einen Wert von 5 GW überschreitet, der übergeordnete Netzabschnitt Teil des elektrischen Versorgungsnetzes ist und der übergeordnete Netzabschnitt einen mittleren bis hohen Schwungmassenindex aufweist, der im Bereich von 20 % bis 100 % liegt.

Ein Kurzschlussstromverhältnis, das auch im deutschen Sprachgebrauch in Fachkreisen als "Short circuit ratio" bezeichnet und mit "SCR" abgekürzt wird, ist das Verhältnis der Kurzschlussleistung zur Anschlussleistung. Die Kurzschlussleistung bezeichnet diejenige Leistung, die das betreffende Versorgungsnetz bzw. hier der betrachtete Netzabschnitt, an dem Netzanschlusspunkt, an dem der betreffende Einspeiser angeschlossen ist, bereitstellen kann, wenn dort ein Kurzschluss auftritt. Die Anschlussleistung bezeichnet die Anschlussleistung des angeschlossenen Einspeisers, nämlich insbesondere seine Nennleistung.

Ein mittleres Kurzschlussstromverhältnis ist der Mittelwert aller Kurzschlussstromverhältnisse der Einspeiser des lokalen Netzabschnitts. Der Mittelwert kann dadurch gebildet werden, dass die Summe aller Kurzschlussleistungen ins Verhältnis gesetzt werden zur Summe aller Anschlussleistungen. Alternativ kann ein Mittelwert über alle Kurzschlussstromverhältnisse gebildet werden, wobei diese proportional zur Nennleistung des jeweiligen Erzeugers gewichtet werden.

Auch kann die Summe aller Anschlussleistungen ins Verhältnis zu einer Kurzschlussleistung eines einzelnen Übertragungspfades gesetzt werden, wenn keine vermaschte Netzstruktur vorhanden ist.

Ein Wert von maximal 4, insbesondere maximal 2, beschreibt somit ein kleines Kurzschlussstromverhältnis. Große Kurzschlussstromverhältnisse weisen einen Wert von etwa 10 auf, zumindest 8 oder wenigstens 6. Ein Kurzschlussstromverhältnis mit einem so geringen Wert von maximal 4 oder weniger kennzeichnet somit einen schwachen Anschluss. Ein solcher schwacher Anschluss kann besonders durch eine lange Anschlussleitung bzw. Verbindungsleitung zum Netzanschlusspunkt verursacht sein . Besonders bei sehr dezentral angeordneten Einspeisern treten daher solche kleinen Kurzschlussstromverhältnisse auf. Besonders Windenergieanlagen bzw. Windparks und Photovoltaikanlagen können sehr dezentral, also weit weg von Verbrauchern, angeordnet sein. Mitunter können bis zu hundert km oder mehrere hundert km zwischen einem solchen dezentralen Einspeiser und einem Verbraucher signifikanter Größe, oder einem Netzschwerpunkt liegen.

Daher wird dieser lokale Netzabschnitt auch als Abschnitt mit lokal hoher Umrichterpenetration bezeichnet, weil die Umrichterpenetration selbst innerhalb dieses lokalen Netzabschnitts an diesen dezentralen Positionen auftritt. Die umrichtergeführten Einspeiser konzentrieren sich also an einigen lokalen Bereichen.

Der übergeordnete Netzabschnitt weist mit einem mittleren bis hohen Schwungmassenindex im Grunde einen starken oder mittelstarken Netzabschnitt auf, der aber aufgrund der besonderen Topologie des lokalen Netzabschnitts diesen nur bedingt stützen kann. Jedenfalls kann die Stützung nicht so gut ausfallen, wie das bei dem lokalen Netzabschnitt ist, der als Abschnitt mit hoher Umrichterpenetration verbunden mit einem starken Netz charakterisiert werden kann. Auch deshalb kann der lokale Netzabschnitt so charakterisiert werden, dass er mit einem normalen Netz verbunden ist. Jedenfalls ist es nicht herausragend stark. Es wurde hier erkannt, dass das übergeordnete Netz zumindest im Vergleich zum lokalen Netzabschnitt steif sein sollte, also einen höheren Schwungmassenindex aufweisen sollte bzw. mehr direkt gekoppelte Schwungmasse aufweisen sollte, um diese Charakterisierung zu begründen.

Beispiele solcher lokaler Netzabschnitte sind beispielsweise aus Texas und Kanada bekannt., aber auch aus Südaustralien. Dort gibt es große Gebiete, die nur schwach besiedelt sind und in denen viele regenerative Energiequellen aufgestellt sind. Hier kann ein Anteil durch erneuerbare Energiequellen eingespeister Leistung bezogen auf verbrauchte Leistung weit über 100% erreichen, in Texas und Kanada bis zu 300% erreichen.

Folgende Eigenschaften kann ein solcher lokaler Netzabschnitt aufweisen, der als Abschnitt mit lokal hoher Umrichterpenetration verbunden mit einem schwachen Netz charakterisiert werden kann.

Eine Eigenschaft ist, dass erneuerbare Energieerzeugung in entfernten Regionen stattfindet, die über lange Leitungen an ein Lastzentrum angebunden sind. Daher ist ein Kurzschlussstromverhältnis an Einspeisepunkten der erneuerbaren Energiequellen sehr klein.

Ein solcher lokaler Netzabschnitt weist auch wenig Schwungmasse auf und diese Eigenschaft ist mit der Eigenschaft des lokalen Netzabschnitts verbunden, dass dieser als schwaches Netz bezeichnet werden kann.

Folgende Herausforderungen und Anforderungen wurden erkannt. Eine Herausforderung ist somit, in ein schwaches Netz einzuspeisen. Dadurch, dass eine sehr hohe Umrichterpenetration vorliegt, kann es schwierig sein, eine Phasenwinkelstabilität aufrechtzuerhalten oder mit hoher Genauigkeit einzuhalten. Das betrifft eine Interaktion zwischen Stromregelung und Phasenwinkel der Spannung. Wie stabil der Phasenwinkel hierbei gehalten werden kann, bezeichnet die Phasenwinkelstabilität. Wenn die Schwungmasse lokal null oder sehr klein ist, muss meistens regelungstechnisch versucht werden, den Phasenwinkel stabil zu halten, bzw. er muss speziell geregelt werden. Der Effekt, dass der Phasenwinkel gezielt stabil gehalten werden muss, tritt weniger auf, wenn z.B. ein lokales Kraftwerk oder ein lokaler Phasenschieber vorhanden sind. Auch eine virtuelle Synchronmaschine könnte hier stabilisierend wirken.

Für einen lokalen Netzabschnitt, der als Abschnitt mit lokal hoher Umrichterpenetration verbunden mit einem normalen Netz charakterisiert werden kann, wird Insbesondere die Auswahl und/oder das Einstellen einer Spannungskombinationsregelung für einen Windpark vorgeschlagen.

Eine Spannungskombinationsregelung beschreibt eine Regelung, bei der für einen Windpark zum Durchsteuern eines Fehlers oder einer Störung eine spannungsabhängige Blindleistungssteuerung für jede Windenergieanlage des Windparks vorgesehen ist, insbesondere mit unterschiedlichen Kennlinien für die Windenergieanlagen, wobei vor und nach der Störung statt der spannungsabhängigen Blindleistungssteuerung für jede Windenergieanlage eine von einer Parksteuerung des Windparks zentral gesteuerte Blindleistungssteuerung eingesetzt wird, bei der die Parksteuerung jeder Windenergieanlage des Windparks einen Blindleistungssollwert vorgibt.

Hier wurde auch erkannt, dass ein solches Netz eine hohe vertikale Netzlast aufweisen kann, die weiter unten noch näher beschrieben wird, und dass die vertikale Netzlast für die lokal hohe Umrichterpenetration zusätzlich eine Schwächung bedeuten kann. Durch die vertikale Netzlast kann sich das Kurzschlussstromverhältnis weiter verringern, oder zumindest klein bleiben. Daher wird hier eine Spannungskombinationsregelung vorgeschlagen, wie sie auch für eine Situation einer hohen lokalen Netzlast vorgeschlagen wird.

Für die spannungsabhängige Blindleistungssteuerung für jede Windenergieanlage werden vorzugsweise Parameter in Abhängigkeit von der vertikalen Netzlast eingestellt, insbesondere wenigstens ein Totband und/oder ein Verstärkungsfaktor, der auch als k-Faktor bezeichnet werden kann. Eine solche Einstellung kann auch oder alternativ in Abhängigkeit von dem mittleren Kurzschlussstromverhältnis vorgenommen werden.

Eine und/oder die beschriebene spannungsabhängige Blindleistungssteuerung für jede Windenergieanlage zum Durchsteuern eines Fehlers oder einer Störung mittels einer Kennlinie, nämlich einer Spannungs-Blindstrom-Kennlinie, kann auch als FRT-Steuerung bezeichnet werden, mit FRT-k-Faktoren und einem FRT-Totband. Auswahl und Einstellung einer FRT-Steuerung kann somit in Abhängigkeit von dem mittleren Kurzschlussstromverhältnis vorgenommen werden.

Der lokale Abschnitt kann auch als Abschnitt mit hoher Umrichterpenetration verbunden mit einem Netz mit hoher Umrichterpenetration charakterisiert werden. Hierbei ist der lokale Netzabschnitt mit einem übergeordneten Netzabschnitt verbunden, die Summe der Verbrauchsleistung aller an das elektrische Versorgungsnetz angeschlossenen Verbraucher überschreitet einen Wert von 5 GW, der übergeordnete Netzabschnitt ist Teil des elektrischen Versorgungsnetzes und der übergeordnete Netzabschnitt weist einen geringen Schwungmassenindex auf, wobei ein geringer Schwungmassenindex durch einen Wert definiert wird, der unterhalb des vorgebbaren Schwungmassenreferenzindexes liegt, oder unterhalb eines zweiten Schwungmassenreferenzwertes liegt. Der zweite Schwungmassenreferenzwert liegt insbesondere im Bereich von 20 bis 40 %.

Hier ist also der lokale Netzabschnitt, der eine hohe Umrichterpenetration aufweist, mit einem übergeordneten Netzabschnitt verbunden, der selbst einen hohen Umrichteranteil aufweist. Er weist somit wenig Schwungmassen auf.

Das elektrische Versorgungsnetz von Irland kann ein Beispiel für ein solches elektrisches Versorgungsnetz bilden. Dort ist das elektrische Versorgungsnetz insgesamt und damit auch der übergeordnete Netzabschnitt durch eine hohe Umrichterpenetration gekennzeichnet und einzelne Netzabschnitte und damit auch wenigstens ein lokaler Netzabschnitt weisen ebenfalls eine hohe Umrichterpenetration auf

Folgende Eigenschaften wurden für solche Netze erkannt:
Es können große Phasenwinkeldifferenzen im elektrischen Versorgungsnetz vorhanden sein. Dies bezeichnet Abweichungen zwischen den Phasenwinkeln bei unterschiedlichen Orten im elektrischen Versorgungsnetz. Es ist eine Übertragungsnetzebene vorhanden, über die viel Leistung übertragen wird. Dabei können diese Leistungsübertragungen schwanken, sowohl nach Richtung als auch nach Größe.

Es ist wenig Schwungmasse vorhanden und daher kann auch der Phasenwinkel weniger gut stabil gehalten werden.

Es ist ebenfalls wenig Kurzschlussleistung verfügbar, sodass dies wenigstens bei etwaigen Netzfehlern berücksichtigt werden muss, die dadurch nämlich schlechter durchsteuert werden können. Für solche Netze sind zudem bisher wenig Erfahrungswerte vorhanden und auch darauf sollte sich eine Regelung einstellen.

Eine Eigenschaft ist auch, dass ein Anteil erneuerbarer Energien bei der Leistungseinspeisung zwischen 10 % und 70 % schwanken kann. Der Anteil der durch regenerative Energiequellen eingespeisten Leistung zu insgesamt eingespeister Leistung kann somit zwischen 10 % und 70 % schwanken.

Besonders wurden folgende Herausforderungen und Anforderungen erkannt. Besonders wurde erkannt, dass Besonderheiten solcher Netze durch entsprechend flexible Regelungen berücksichtigt werden sollten. Insbesondere können adaptive Regler in solchen Regelungen eingesetzt werden und sie können den noch geringen Erfahrungsschatz ausgleichen.

Unter anderem wurde erkannt, dass mitunter hohe Anteile regenerativer Erzeuger an eingespeister Leistung zu berücksichtigen sind. Die oben genannten Eigenschaften können durch entsprechende Regelung adressiert werden. Eine Möglichkeit ist, eine Regelung bzw. die Art der Einspeisung so zu gestalten, dass sie als virtuelle Synchronmaschine arbeiten. Der Mangel an konventionellen Synchronmaschinen, die als direkt mit dem elektrischen Versorgungsnetz gekoppelte Synchrongeneratoren ausgebildet sind, kann durch eine entsprechende Emulation, nämlich in Form von virtuellen Synchronmaschinen, zumindest teilweise kompensiert werden.

Der lokale Netzabschnitt kann auch als Abschnitt mit unbestimmten Verhalten_charakterisiert werden, wenn keine der vorstehend genannten Charakterisierungen zutreffend sind. In einem solchen Fall können bisher verwendete Regelungsstrategien verwendet werden, oder es können Eigenschaften und Verhaltensweisen durch Voruntersuchungen oder Messungen erfasst und daran die Einspeiseregelung angepasst werden.

Es wird zu den unterschiedlichen möglichen Charakterisierungen dann vorgeschlagen, das Regelungsverhalten in Abhängigkeit von den vorstehend erläuterten Netzcharakteristika auszuwählen und/oder einzustellen. Dadurch ist eine angepasste Regelungsstrategie möglich.

Es wurde auch erkannt, dass in verschiedenen elektrischen Versorgungsnetzen es in Abhängigkeit von einer aktuellen Umrichterpenetration und/oder in Abhängigkeit von einem erneuerbaren Kapazitätsfaktor zu unterschiedlichen Anforderungen an die Einspeiser kommen kann. Das wird durch das Auswerten oder Einstellen des Regelungsverhaltens adressiert. Besonders kommt hier in Betracht, dass es auch zu unterschiedlichen Fehlerstrategien kommen kann. Ebenso kann ein lokaler Export oder Import entscheidend sein und auch der kann mit dem Regelungsverhalten berücksichtigt werden. Ebenfalls von Relevanz ist ein mittlerer lokaler Arbeitspunkt der erneuerbaren Energiequellen, also der Einspeiser, die aus regenerativen Energiequellen einspeisen.

Die erkannten Unterschiede können durch das Regelungsverhalten berücksichtigt werden und somit die Einspeiseregelung entsprechend ausgewählt oder eingestellt werden. Damit wird das Einspeisen der elektrischen Leistung mittels eines umrichtergeführten Einspeisers gesteuert. Die Einspeiseregelung steuert also den umrichtergeführten Einspeiser. Die Einspeiseregelung kann damit insbesondere ein Windenergiesystem, also eine Windenergieanlage oder einen Windpark, entsprechend steuern.

Es kommt aber auch in Betracht, dass zusätzlich andere Einspeiser gesteuert werden. Besonders dann, wenn der umrichtergeführte Einspeiser nur noch unzulänglich gesteuert werden kann, und andere Einspeise einen Teil seiner Steueraufgabe übernehmen müssen, oder dies zumindest vorgeschlagen wird, kann das vorgeschlagene Verfahren eine solche Steuerung anderer Einspeiser mit umfassen.

Insbesondere wird auch vorgeschlagen, dass nicht nur der eine umrichtergeführte Einspeiser, sondern auch mehrere umrichtergeführte Einspeiser des lokalen Netzabschnitts gesteuert werden, insbesondere auf gleiche Art und Weise gesteuert werden. Dadurch können sich die Vorteile und Eigenschaften der vorgeschlagenen Steuerung besonders stark auswirken, wenn sie von vielen umrichtergeführten Einspeisern parallel umgesetzt werden. Vorzugsweise wird das Steuern mehrerer umrichtergeführter Einspeiser zentral koordiniert. Insoweit kann eine Einspeiseregelung mehrere verteilte Regelungen oder Regler beinhalten und/oder koordinieren.

Gemäß einem Aspekt wird das Regelungsverhalten zusätzlich in Abhängigkeit von einem Netzzustand des elektrischen Versorgungsnetzes ausgewählt oder eingestellt. Außerdem oder alternativ wird es in Abhängigkeit von einem aktuellen Umrichtereinspeiseanteil ausgewählt oder eingestellt. Dabei gibt ein Umrichtereinspeiseanteil ein Verhältnis mittels Umrichter des lokalen Netzabschnitts eingespeister Leistung zu insgesamt durch alle Einspeiser des lokalen Netzabschnitts eingespeister Leistung an.

Es wird also vorgeschlagen, das Regelungsverhalten zusätzlich in Abhängigkeit von einer aktuellen Einspeisesituation auszuwählen oder einzustellen. Ein Netzzustand kann hier besonders bezeichnen, wie viel Leistung eingespeist und entnommen wird und durch welche Art von Einspeisern die Leistung unter welcher Aufteilung eingespeist wird.

Der aktuelle Umrichtereinspeiseanteil des lokalen Netzabschnitts kann somit einen Netzzustand des elektrischen Versorgungsnetzes sein. Gegenüber der Umrichterpenetration, die nur auf das Verhältnis zwischen Nennleistungen angeschlossener Einspeiser abstellt, betrifft der Umrichtereinspeiseanteil das Verhältnis der tatsächlich eingespeisten Leistungen. Es wird somit vorgeschlagen, beides zu berücksichtigen. Dies soll nämlich beim Einstellen des Regelungsverhaltens berücksichtigt werden. Das Einstellen des Regelungsverhaltens beinhaltet grundsätzlich immer auch das Auswählen des Regelungsverhaltens, nicht nur für diesen Aspekt. Schließlich kann das Einstellen eines Regelungsverhaltens auch durch das Auswählen zwischen Regelungsverhalten mit unterschiedlichen Einstellungen durchgeführt werden. Es können aber auch grundsätzlich unterschiedliche Regelungsverhalten ausgewählt werden, die aber auch durch entsprechende Einstellungen erreicht werden können. Beispielsweise kann zwischen einem linearen und einem nichtlinearen Regelungsverhalten ausgewählt werden.

Besonders wird vorgeschlagen, dass die Umrichterpenetration, die insoweit einen statischen Umrichteranteil bildet, einen Kurzschlussstrom festlegt. Dieser kann somit durch eine Änderung der statischen Verhältnisse und/oder eine Aktivierung oder Begrenzung angepasst werden, wenn er zu klein bzw. zu groß ist. Dieser statische Anteil, also die Umrichterpenetration, kann auch die Größe eines Spannungstrichters im Fehlerfall beeinflussen, der beschreibt, wie stark eine Spannung, insbesondere die Netzspannung, schwanken, bzw. einbrechen kann.

Der dynamische Umrichteranteil, also der Umrichtereinspeiseanteil, kann einen Einfluss auf eine Wirkleistungsregelung während einer dynamischen Netzstützung haben. Eine dynamische Netzstützung ist insoweit eine frequenzabhängige Wirkleistungseinspeisung, also die Veränderung der Wirkleistungseinspeisung in Abhängigkeit von Abweichungen der Netzfrequenz von einer Netznennfrequenz oder anderem Referenzwert der Frequenz. Hier wird besonders vorgeschlagen, dass bei einem großen Umrichtereinspeiseanteil bei einer solch dynamischen Netzstützung möglichst wenig Wirkleistung verlorengehen soll.

Dazu kann eine Wirkleistungspriorität vorgeschlagen werden, die auch als Wirkleistungspriorisierung bezeichnet werden kann, bei derdem Einspeisen von Wirkleistung gegenüber dem Einspeisen von Blindleistung eine Priorität eingeräumt wird, wenn beide Einspeisungen aufgrund einer Strombegrenzung nicht gleichzeitig in voller Höhe durchgeführt werden können. Das vermeidet einen Wirkleistungsverlust, der andernfalls entstehen könnte, wenn ohne Wirkleistungspriorisierung das Einspeisen einer Blindleistung das Einspeisen einer Wirkleistung begrenzen oder zu 0 reduzieren könnte. Das wird somit besonders für einen hohen dynamischen Umrichteranteil, also einen hohen Umrichtereinspeiseanteil, vorgeschlagen. Besonders wenn ein großer Spannungstrichter erwartet wird, bzw. Spannungseinbrüche einen großen Bereich betreffen würden und somit viele regenerative Einspeiser, kann dies erst recht vorgeschlagen werden.

Insbesondere kommen folgende Maßnahmen zum Einstellen bzw. Auswählen des Regelungsverhaltens in Betracht, die auch eine mögliche Charakterisierung des lokalen Netzabschnitts berücksichtigen. Im Übrigen wird allgemein vorgeschlagen, wenigstens drei Netzcharakteristika des lokalen Netzabschnitts zu berücksichtigen. Insbesondere wird vorgeschlagen zu berücksichtigen, ob der lokale Netzabschnitt als Abschnitt mit hoher Umrichterpenetration verbunden mit einem starken Netz, als Abschnitt mit lokal hoher Umrichterpenetration verbunden mit einem schwachen Netz, oder als Abschnitt mit hoher Umrichterpenetration verbunden mit einem Netz mit hoher Umrichterpenetration charakterisiert wird. Vorzugsweise wird vorgeschlagen, dass eine Überprüfung, welche Netzcharakteristik vorliegt, nach Ablauf einer Überprüfungszeit, die insbesondere im Bereich von 1 Monat bis 1 Jahr liegen kann, wiederholt wird.

Wenn der lokale Netzabschnitt als Inselnetz charakterisiert werden kann, werden folgende Regelungsverhalten vorgeschlagen.

Es wird eine Wirkleistungspriorisierung vorgeschlagen, die synonym auch als Wirkleistungspriorität bezeichnet werden kann. Dazu wird vorzugsweise das Vorsehen einer Wirkstromobergrenze ergänzend vorgeschlagen. Vorzugsweise wird die Wirkstromobergrenze in Abhängigkeit von aktuellen Wirkleistungsanteilen eingestellt, insbesondere in Abhängigkeit von dem Umrichtereinspeiseanteil.

Vorzugsweise wird zudem vorgeschlagen, einen maximalen Mindestblindstrom sicherzustellen, der insbesondere so hoch dimensioniert ist, dass benachbarte Stromsicherungen ausgelöst werden können. Netzstränge können durch Sicherungen abgesichert sein, die bei zu hohem Strom auslösen und dann öffnen. Durch die Einspeisung eines entsprechend hohen Blindstroms kann eine solche Sicherung, die insoweit einen Netztrennschalter bildet, ausgelöst werden. Dadurch kann gezielt die Netztopologie beeinflusst werden.

Vorzugsweise wird ein geringer k-Faktor vorgeschlagen. Ein solcher k-Faktor beschreibt einen Zusammenhang zwischen einer Spannungsabweichung und einem einzuspeisenden Blindleistungsanteil. Die Spannungsabweichung bezeichnet eine Abweichung der Netzspannung von einem Referenzwert, insbesondere von der Netznennspannung. Diese Abweichung kann als normierte Abweichung auf die Netznennspannung normiert sein. Der Blindleistungsanteil bezeichnet eine Blindleistung, die in Abhängigkeit von der Spannungsabweichung zusätzlich einzuspeisen wird. Das kann auch die einzige Blindleistung sein, die einzuspeisen ist. Der Blindleistungsanteil kann als normierter Blindleistungsanteil normiert auf die Nennleistung des entsprechenden Einspeisers berücksichtigt werden. Der k-Faktor ist dann der Quotient aus normiertem Blindleistungsanteil und normierter Spannungsabweichung. Ein kleiner k-Faktor weist einen Wert von weniger als 4 auf, insbesondere weniger als 3 und vorzugsweise weniger als 2.

Bei einer Charakterisierung des lokalen Netzabschnitts als Inselnetz wird außerdem, zumindest gemäß einem Aspekt, eine Gegensystemeinspeisung vorgeschlagen. Ein nichtsymmetrisches dreiphasiges Netz kann durch die Methode der symmetrischen Komponenten beschrieben werden. Es ergibt sich dann eine Mitsystemkomponente und eine Gegensystemkomponente, was vereinfachend auch als Mitsystem oder Gegensystem bezeichnet wird, und die Mitsystemkomponente ist diejenige, die den symmetrischen und hoffentlich überwiegenden Anteil des dreiphasigen Systems beschreibt.

Üblicherweise wird symmetrisch eingespeist, um dadurch dem elektrischen Versorgungsnetz möglichst ein symmetrisches Verhalten zu geben. Die Asymmetrien können über die Gegensystemkomponente berücksichtigt werden. Gleichwohl ist es unüblich, eine Gegensystemkomponente einzuspeisen. Hier wird aber genau das vorgeschlagen, nämlich im Inselnetzfall einen asymmetrischen Teil einzuspeisen, nämlich indem eine Gegensystemkomponente eingespeist wird, insbesondere über einen Gegensystemstrom.

Wird der lokale Netzabschnitt als Abschnitt mit hoher Umrichterpenetration verbunden mit einem starken Netz charakterisiert, wird folgendes Regelungsverhalten vorgeschlagen. Es wird eine Blindleistungspriorisierung bzw. Blindleistungspriorität vorgeschlagen, demnach der Blindleistungseinspeisung der Vorzug gegeben wird, wenn eine vorgesehene Wirkleistungseinspeisung zusammen mit einer vorgesehenen Blindleistungseinspeisung eine Stromgrenze erreichen würde. Hier liegt besonders der Gedanke zugrunde, dass bei einem solchen lokalen Netzabschnitt eine Spannungsstabilisierung durch die Blindleistungseinspeisung im Vordergrund steht, weil durch den übergeordneten Netzabschnitt ausreichend Wirkleistung bei Bedarf bereitgestellt werden kann und der Blindstrom benötigt wird, um die Selektivität des Netzschutzes, insbesondere in vermaschten Netzstrukturen, sicherzustellen.

Deswegen wird vorzugsweise auch ein hoher k-Faktor vorgesehen, der insbesondere größer als 4 ist, vorzugsweise größer als 6 ist und insbesondere größer als 8 ist.

Vorzugsweise wird für einen solchen lokalen Netzabschnitt vorgeschlagen, eine Blindstromobergrenze vorzusehen, wenn ein hoher Umrichtereinspeiseanteil des lokalen Netzabschnitts vorliegt. Ein hoher Umrichtereinspeiseanteil liegt besonders dann vor, wenn sein Wert über 60 % liegt. Hier wurde besonders erkannt, dass mit einem hohen dynamischen Umrichteranteil, also mit einem hohen Umrichtereinspeiseanteil, eine Spannungsstützung durch Blindleistungseinspeisung, bei Blindleistungspriorisierung zu einem Rückgang der eingespeisten Wirkleistung führen kann, der bei einem hohen Umrichtereinspeiseanteil signifikant sein kann und möglicherweise sogar die Stabilität des gesamten Netzes beeinträchtigt. Daher wird eine Blindstromobergrenze vorgeschlagen, um das zu verhindern.

Ist aber der Umrichtereinspeiseanteil gering, während aber die Umrichterpenetration hoch ist, können die umrichtergeführten Einspeiser des lokalen Netzabschnitts einen hohen Beitrag zur Spannungsstützung durch Blindleistungseinspeisung leisten, ohne dass dies einen starken Rückgang der Wirkleistungseinspeisung zur Folge hat. Hier wurde besonders erkannt, dass solche umrichtergeführten Einspeiser, insbesondere nämlich regenerative Energiequellen, einen hohen Blindstrom bzw. eine hohe Blindleistung liefern können, selbst wenn sie aktuell nur wenig Wirkleistung liefern können, weil z. B. im Falle von Windenergieanlagen der Wind gering ist bzw. im Falle von Photovoltaikanlagen die Sonneneinstrahlung gering ist.

Wenn der lokale Netzabschnitt als Abschnitt mit lokal hoher Umrichterpenetration verbunden mit einem schwachen Netz charakterisiert werden kann, wird das folgende Regelungsverhalten vorgeschlagen. Es wird vorgeschlagen, einen Zero-Power-Mode oder eine kontinuierliche Spannungsregelung einzusetzen. Ein Zero-Power-Mode ist ein Verfahren, bei dem ein Einspeiser Blindleistung einspeist, ohne Wirkleistung einzuspeisen. Das kommt besonders dann in Betracht, wenn gar keine Wirkleistung zum Einspeisen vorhanden ist. Der Zero Power Mode kann daher auch synonym als Blindleistungseinspeisung ohne Wirkleistungseinspeisung bezeichnet werden.

Hier kommt es unter anderem auch darauf an, was somit vorgeschlagen wird, umrichtergeführte Einspeiser, also insbesondere regenerative Einspeiser, die auch synonym als regenerative Energiequellen bezeichnet werden können, nicht vom elektrischen Versorgungsnetz, also nicht vom lokalen Netzabschnitt zu trennen, obwohl keine Wirkleistung zur Einspeisung verfügbar ist. Grundsätzlich ist es besser, Anlagen vom Netz zu trennen, wenn sie nicht einspeisen können, hier wird aber dieser besondere Modus vorgeschlagen, um den Besonderheiten dieses lokalen Netzabschnitts Rechnung zu tragen. Dieser lokale Netzabschnitt zeichnet sich nämlich besonders durch die örtlich weit verteilten regenerativen Einspeiser aus, was durch lange Übertragungsleitungen gekennzeichnet ist. Hier kommen entsprechende Spannungsabfälle in Betracht, denen somit in besonderem Maße entgegengeregelt wird.

Vorzugsweise wird hier besonders berücksichtigt, wie groß das übergeordnete Netz ist. Als Größe wird hier die jeweils einspeisbare Leistung betrachtet, nämlich jeweils von allen in dem jeweiligen Netzabschnitt angeschlossenen Einspeisern. Wenn das übergeordnete Netz, was auch den übergeordneten Netzabschnitt bezeichnen kann, weniger als fünfmal so groß wie der lokale Netzabschnitt ist, dann wird vorgeschlagen, bei einem hohen Umrichtereinspeiseanteil die eingespeiste Wirkleistung zu verringern und/oder eine Scheinstromgrenze einzuführen, die eine maximale Wirkleistungseinspeisung verhindert. Hierbei wird berücksichtigt, dass von dem übergeordneten Netzabschnitt dann keine sehr große Stützwirkung zu erwarten ist, die somit von dem lokalen Netzabschnitt zumindest teilweise selbst gewährleistet werden muss. Durch die Reduzierung der eingespeisten Wirkleistung kann dadurch ein Regelungspotential geschaffen werden und/oder es wird erreicht, dass der lokale Netzabschnitt bzw. die Einspeiser nicht an Leistungsgrenzen betrieben wird bzw. betrieben werden. Auch dadurch kann eine Stabilisierung erreicht bzw. eine Destabilisierung vermieden werden.

Außerdem oder alternativ wird vorgeschlagen, einen kleinen k-Faktor zu wählen. Ein kleiner k-Faktor ist auch hier einer, der kleiner als 4, vorzugsweise kleiner als 3, insbesondere kleiner als 2 ist. Durch einen kleinen Verstärkungsfaktor kann vermieden werden, dass ein zu hoher Blindstrom erzeugt wird, der die Wirkleistungseinspeisung beeinträchtigen kann, was wiederum die Netzstabilität beeinträchtigen kann.

Folgende Reglerverhalten werden vorgeschlagen, wenn der lokale Netzabschnitt als Abschnitt mit hoher Umrichterpenetration verbunden mit einem Netz mit hoher Umrichterpenetration charakterisiert werden kann. In diesem Fall wird eine kontinuierliche Spannungsregelung vorgeschlagen, insbesondere eine spannungsabhängige Blindleistungseinspeisung und/oder das Einspeisen umrichtergeführter Einspeiser in einem Spannungsprägungsmodus. In beiden Fällen wird eine Spannungsregelung ohne Totband vorgeschlagen, bei der jegliche Abweichungen bereits zu einer Aktion des Ausregelns führt. Zumindest für einige umrichtergeführte Einspeiser wird somit, gemäß zweitem Fall, statt eines sonst üblichen stromprägenden Einspeisens, bei dem ein einzuspeisender Strom vorgegeben wird, ein spannungsprägendes Einspeisen vorgeschlagen, bei dem so eingespeist wird, dass eine Spannung gehalten wird.

Außerdem oder alternativ kommt eine dynamische Netzstützung mit Totband in Betracht, wobei vorzugsweise eine Blindleistungspriorität bzw. Blindleistungspriorisierung zusammen mit einer Blindstromobergrenze vorgeschlagen wird. Dieses Reglerverhalten kann in Abhängigkeit vom Umrichtereinspeiseanteil eingestellt werden. Insbesondere das Vorsehen einer Blindstromobergrenze kann in Abhängigkeit von dem Umrichtereinspeiseanteil eingestellt werden, insbesondere so, dass eine Blindstromobergrenze erst ab einem Umrichtereinspeiseanteil von wenigstens 50 %, insbesondere wenigstens 60 % vorgegeben wird.

Bei einer dynamischen Netzstützung mit Totband erfolgt eine Blindleistungseinspeisung in Abhängigkeit von einer Spannungsabweichung. Bei der Spannungsabweichung wird die Abweichung der Netzspannung von der Nennspannung betrachtet, wobei aber ein Totband vorgesehen ist, innerhalb dessen Spannungsabweichungen nicht berücksichtigt werden. Insbesondere ist vorgesehen, dass das Totband einen Bereich um die Netznennspannung bildet, mit einem unteren Referenzwert, der unterhalb der Netznennspannung liegt, und einem oberen Referenzwert, der oberhalb der Netznennspannung liegt. Die Blindleistungseinspeisung erfolgt dann abhängig davon, wie groß die Spannungsabweichung in Bezug auf eine dieser Grenzen ist. Als Spannungsabweichung wird dann also nur eine Spannungsabweichung oberhalb des oberen Grenzwertes oder unterhalb des unteren Grenzwertes betrachtet.

Insbesondere wird eine Blindleistungspriorisierung vorgesehen, demnach eine Wirkleistungseinspeisung reduziert wird, wenn das notwendig ist, um innerhalb einer vorgegebenen Scheinstromgrenze die vorgesehene Blindleistung einspeisen zu können.

Für den lokalen Netzabschnitt, der als Abschnitt mit hoher Umrichterpenetration verbunden mit einem Netz mit hoher Umrichterpenetration charakterisiert werden kann, wird zudem ein kleiner k-Faktor vorgeschlagen. Der k-Faktor kann wie oben beschrieben definiert werden und weist einen Wert auf, der kleiner als 4, vorzugsweise kleiner als 3 und insbesondere kleiner als 2 ist. Damit wird vermieden, dass die Blindleistung zu schnell an ihre Grenzen stößt.

Vorzugsweise wird besonders bei der dynamischen Netzstützung ein integraler Anteil verwendet. Besonders durch das Totband kann vermieden werden, dass bei geringen Spannungsabweichungen bereits eine spannungsabhängige Blindleistungseinspeisung einsetzt. Durch den Integralanteil kann aber erreicht werden, dass dann, wenn die Abweichung ausreichend groß ist, die entsprechende Blindleistung weiter erhöht werden kann, wenn ihr Einspeisen keinen ausreichenden Effekt auf die Spannung hat. Durch die Kombination mit dem Totband kann vermieden werden, dass ein schleichendes Aufintegrieren bei nur geringen Spannungsabweichungen erfolgt.

Mit all diesen Maßnahmen wird berücksichtigt, dass der übergeordnete Netzabschnitt weder viel Stützleistung liefern kann noch eine starke stabilisierende Eigenschaft für Spannung und Frequenz aufweist. Es wird im Grunde berücksichtigt, dass der lokale Netzabschnitt einschließlich der Netzabschnitte, die ihn umgeben, einen hohen statischen Umrichteranteil hat, also eine hohe Umrichterpenetration. Das Regelungsverhalten muss also so gestaltet sein, dass sich der lokale Netzabschnitt in Wesentlichen selbst so regeln kann, dass er gut arbeitet, aber auch, dass er mit dem übrigen elektrischen Versorgungsnetz verbunden bleiben kann.

Fällt der lokale Netzabschnitt unter keine dieser Charakterisierungen, so kann er als Abschnitt mit unbestimmtem Verhalten charakterisiert werden. In dem Fall kann eine spannungsabhängige Blindleistungseinspeisung mit einem mittleren k-Faktor verwendet werden. Der k-Faktor kann dann den Wert 5 betragen, wobei auch ein Wert von 4 oder 6 in Betracht kommt, oder Werte dazwischen. Die spannungsabhängige Blindleistungseinspeisung kann ebenfalls ein Totbandverhalten aufweisen, wie oben beschrieben.

Vorzugsweise wird ein adaptives Verhalten für die Einspeiseregelung vorgeschlagen. Adaptionsalgorithmen können besonders so arbeiten, dass ein gewünschtes Systemverhalten auf einen Regelungsvorgang angenommen wird und dieses Regelungsverhalten mit einem erreichten Regelungsverhalten verglichen wird. Aus dem Vergleich können dann Adaptionen des Regelungsverhaltens abgeleitet werden.

Solche Adaptionen können im einfachsten Fall die Veränderung eines Verstärkungsfaktors beinhalten. Wird beispielsweise eine Einspeiseregelung ausgewählt und eingestellt, die auf eine Blindleistungseinspeisung von 50 % mit einer Spannungsreduktion um 10 % rechnet, die Spannungsreduktion tatsächlich aber 20 % beträgt, so kann ein Verstärkungsfaktor dieses Regelungsverhaltens halbiert werden, um dieses einfache Beispiel zu nehmen.

Dadurch kann sich eine solche adaptive Einspeiseregelung auf geänderte und hier insbesondere auf noch nicht genau bekannte Systemverhalten einstellen. Vorzugsweise kann das Verstärkungsverhalten der Einspeiseregelung in Abhängigkeit von dem Umrichtereinspeiseanteil voreingestellt sein und/oder es ist in Abhängigkeit von der konkreten Umrichterpenetration voreingestellt.

Gemäß einem Aspekt wird vorgeschlagen, dass das Regelungsverhalten der Einspeiseregelung in Abhängigkeit von einer vertikalen Netzlast des lokalen Netzabschnitts oder übergeordneten Netzabschnitts ausgewählt oder eingestellt wird, wobei die vertikale Netzlast eine vorzeichenrichtige Summe aller Leistungsübertragungen aus einem mit dem Netzabschnitt verbunden Übertragungsnetz über direkt angeschlossene Transformatoren ist.

Hier liegt besonders die Überlegung zugrunde, dass in globalen Energieversorgungsnetzen eine Leistungsbilanz weitestgehend zu jedem Zeitpunkt ausgeglichen ist. Lokal kann es aber aufgrund von einer regenerativen Einspeisung, aber auch aufgrund von einer konventionellen Erzeugung zu einem Leistungsüberschuss und Exporten aus einem anderen Netzabschnitt kommen. Die vertikale Netzlast wird dann negativ und aus dem lokalen Netzabschnitt wird Leistung exportiert.

Städte und Lastzentren, insbesondere industrielle Verbraucher, sind häufig lokal unterspeist und bilden somit Importzonen. Sie importieren also Leistung aus anderen Teilen des elektrischen Versorgungsnetzes.

Es wurde auch erkannt, dass, obwohl sich die Exporte und Lastflüsse durch Änderungen der konventionellen Erzeuger ändern können, für viele Änderungen einschließlich Überspeisungen oder Unterspeisungen heute erneuerbare Energiequellen die Ursache sein können. Die Ursache liegt also häufig in umrichtergeführten Einspeisern.

Es wurde erkannt, dass Großwetterlagen mit viel Wind und Sonne in manchen Regionen zu einer starken Überspeisung führen können. Solche Überspeisungen können sich im Laufe von Stunden ändern. So kann sich beispielsweise ein Export von 6 GW an einem Tag um 16 Uhr auf einen Import von 1 GW bis 24 Uhrdesselben Tages ändern. Ein solcher Wechsel kann für eine gesamte Netzlast in dem Zeitraum von etwa 12GW auftreten. Die Herausforderung der Steuerung der lokalen Leistungsbilanz des lokalen Netzabschnitts ergibt sich somit zumindest indirekt häufig durch den Anteil erneuerbarer Energiequellen an der Gesamteinspeisung.

Somit wird auch zu diesem Aspekt vorgeschlagen, einen tatsächlichen Einspeisezustand des elektrischen Versorgungsnetzes zu berücksichtigen. Die vertikale Netzlast kann als ein Netzzustand angesehen werden. Wenn die Einspeiseregelung das Einspeisen der elektrischen Leistung in Abhängigkeit von der Netzlast steuert, steuert sie es somit in Abhängigkeit von einem Netzzustand.

Hier wurde auch erkannt, dass Exporte ein lokales Problem verschärfen können, weil sie das Netz schwächen können, aber sie können auch über eine vertikale Netzlast abgegeben werden. In einem solchen Fall kann für eingespeiste Leistung aus erneuerbaren Energien ein Wert von über 100% vorliegen, bezogen auf die von Verbrauchern desselben Netzabschnitts verbrauchte Leistung.

Hier ist besonders vorgesehen, dass die Änderung durch umrichtergeführte Einspeiser über einen Änderungsgradienten oder eine andere Änderungsfunktion gesteuert wird, um eine zu starke Änderung zu vermeiden.

Insbesondere wird in Abhängigkeit von der vertikalen Netzlast des lokalen Netzabschnitts oder übergeordneten Netzabschnitts die Auswahl und/oder das Einstellen einer Spannungskombinationsregelung für einen Windpark vorgeschlagen.

Eine Spannungskombinationsregelung beschreibt eine Regelung, bei der für einen Windpark zum Durchsteuern eines Fehlers oder einer Störung eine spannungsabhängige Blindleistungssteuerung für jede Windenergieanlage des Windparks vorgesehen ist, insbesondere mit unterschiedlichen Kennlinien für die Windenergieanlagen, wobei vor und nach der Störung statt der spannungsabhängigen Blindleistungssteuerung für jede Windenergieanlage, eine von einer Parksteuerung des Windparks zentral gesteuerte Blindleistungssteuerung eingesetzt wird, bei der die Parksteuerung jeder Windenergieanlage des Windparks einen Blindleistungssollwert vorgibt.

Für die spannungsabhängige Blindleistungssteuerung für jede Windenergieanlage werden vorzugsweise Parameter in Abhängigkeit von der vertikalen Netzlast eingestellt, insbesondere wenigstens ein Totband und/oder ein Verstärkungsfaktor, der auch als k-Faktor bezeichnet werden kann.

Eine und/oder die beschriebene spannungsabhängige Blindleistungssteuerung für jede Windenergieanlage zum Durchsteuern eines Fehlers oder einer Störung mittels einer Kennlinie, nämlich einer Spannungs-Blindstrom-Kennlinie, kann auch als FRT-Steuerung bezeichnet werden, mit FRT-k-Faktoren und einem FRT-Totband.

Hier kann das Netz frequenz- oder spannungsweicher sein. Dazu wird vorgeschlagen, kleinere k-Faktoren zu verwenden, die also kleiner als 4, vorzugsweise kleiner als 3, insbesondere kleiner als 2 sind. Es wird also vorgeschlagen, eine Statik in diesem Sinne anzupassen, die eine spannungsabhängige Blindleistungseinspeisung vorgibt. Das Totband wird vorzugsweise nicht geändert. Es kommt auch eine Änderung der Priorisierung in Betracht, bei der von Blindleistungspriorisierung auf Wirkleistungspriorisierung umgeschaltet wird, wenn eine vertikale Netzlast negativ wird.

Gemäß einem Aspekt wird vorgeschlagen, dass das Reglungsverhalten des Einspeisereglers in Abhängigkeit von einer Spannungsweichheit des lokalen Netzabschnitts oder übergeordneten Netzabschnitts eingestellt wird, wobei
die Spannungsweichheit definiert ist durch einen Kehrwert eines Quotienten zwischen einem Wert einer relativen Blindleistungsänderung als Änderung insgesamt in den lokalen Netzabschnitt eingespeister Blindleistung, bezogen auf maximal in diesen Netzabschnitt einspeisbarer Blindleistung einerseits, und einem Wert einer aus dieser Änderung der eingespeisten Blindleistung resultierenden relativen Spannungsänderung an einem Referenzpunkt des lokalen Netzabschnitts andererseits. Die Blindleistungsänderung, die insbesondere als prozentuale Blindleistungsänderung angegeben werden kann, ist somit eine Änderung der Blindleistung, die auf insgesamt in den lokalen Netzabschnitt einspeisbare Blindleistung normiert ist. Das kann besonders die Summe der Nennwerte der Blindleistungen aller Einspeiser des Netzabschnitts sein. Die relative Spannungsänderung kann auf eine Nennspannung an dem Referenzpunkt normiert sein.

Es wurde besonders erkannt, dass spannungsweiche Netze Netze sind, in denen die Spannung sensitiv auf eine Änderung der Blindleistungsbilanz reagiert. Die Blindleistungsbilanz ist insoweit die insgesamt eingespeiste Blindleistung. Ändert sich diese, kann sich das unterschiedlich stark auf die Spannung auswirken. Je stärker es sich auf die Spannung auswirkt, umso spannungsweicher ist das betreffende elektrische Versorgungsnetz bzw. der Netzabschnitt, was hier vereinfachend als Netz bezeichnet wurde.

Es wurde weiter erkannt, dass eine lokale Spannungsweichheit und eine globale Spannungsweichheit unterschieden werden können. Eine lokale Spannungsweichheit kann besonders dann entstehen, wenn Erzeugungsleistung an eine sehr lange Leitung angeschlossen wird bzw. in diese eingespeist wird, und diese elektrisch weit weg zwischen einem Netzschwerpunkt und einer Erzeugung ist. Elektrisch weit weg bedeutet, dass zwischen dem Punkt, an dem die Erzeugungsleistung in diese lange Leitung eingespeist wird, und dem Netzschwerpunkt eine große Phasenwinkeldifferenz auftritt. Diese kann über 25°, insbesondere über 45° oder sogar insbesondere über 60° betragen. Eine Veränderung der lokalen Blindleistungsbilanz führt hierbei zu einer großen Änderung der Spannung. Deswegen wird hier von einer lokalen Spannungsweichheit gesprochen.

Ist lokal gar keine oder nur eine sehr geringe Schwungmasse vorhanden, führt die Beeinflussung des Phasenwinkels, also die genannte große Phasenwinkeldifferenz, auch zu einer lokalen Frequenzänderung. Das führt dann dazu, dass die lokale Frequenz dadurch stärker um eine mittlere Frequenz schwankt.

Eine globale Spannungsweichheit kann nur in räumlich kleiner ausgedehnten Netzen mit einem kleinen Anteil von Synchrongeneratoren auftreten, in der eine Beeinflussung der Spannung durch eine Änderung der Blindleistungsbilanz im gesamten Netz überhaupt erst möglich ist. Das elektrische Versorgungsnetz hat in dem Fall also insgesamt einen kleinen Anteil von Synchrongeneratoren und damit kann eine Netztopologie vorliegen, bei der auch die Spannung insgesamt, also im gesamten elektrischen Versorgungsnetz, von Blindleistungsänderungen stark abhängt.

Hier wurde besonders erkannt, dass eine lokale Spannungsweichheit häufiger auftreten kann und insbesondere in entsprechenden lokalen Netzabschnitten auftreten kann. Eine lokale Spannungsweichheit kann insbesondere in einem lokalen Netzabschnitt auftreten, der als Abschnitt mit lokal hoher Umrichterpenetration verbunden mit einem schwachen Netz charakterisiert werden kann. Es wird besonders vorgeschlagen, eine hohe Spannungsweichheit durch einen kleinen k-Faktor zu berücksichtigen. Insbesondere wird vorgeschlagen, einen kleinen k-Faktor zu wählen, der kleiner als 4, vorzugsweise kleiner als 3, insbesondere kleiner als 2 ist, wenn die Spannungsweichheit einen Weichheitsreferenzwert überschreitet. Insbesondere wird als Weichheitsreferenzwert ein Wert von 25 % vorgeschlagen.

Gemäß einem Aspekt wird vorgeschlagen, dass das Reglungsverhalten des Einspeisereglers in Abhängigkeit von einer Frequenzweichheit des lokalen Netzabschnitts oder übergeordneten Netzabschnitts eingestellt wird, wobei die Frequenzweichheit definiert ist durch einen Kehrwert eines Quotienten zwischen einem Wert einer relativen, insbesondere prozentualen, Änderung insgesamt in den lokalen Netzabschnitt eingespeister Wirkleistung und der aus dieser Änderung der eingespeisten Wirkleistung resultierenden Frequenzänderungsgeschwindigkeit in dem Netzabschnitt. Die Änderung der eingespeisten Wirkleistung kann auf die Summe der Nennleistung aller Einspeiser des lokalen Netzabschnitts normiert werden. Die resultierende Frequenzänderungsgeschwindigkeit kann ebenfalls normiert werden auf die Netznennfrequenz pro Sekunde. Ändert sich die Frequenz also um 0,1 Hz/s, beträgt die resultierende normierte Frequenzänderungsgeschwindigkeit 0,2.

Es wurde erkannt, dass in frequenzweichen Netzen eine kleine Leistungsänderung zu einer Beeinflussung der Netzfrequenz führen kann. Es wird vorgeschlagen, das bei dem Regelungsverhalten zu berücksichtigen.

Besonders wurde erkannt, dass zwischen lokal frequenzweich und global frequenzweich unterschieden werden kann. Die auf den lokalen Netzabschnitt bezogene Frequenzweichheit ist somit eine lokale Frequenzweichheit. Zur lokalen Frequenzweichheit ist Folgendes zu bemerken. In einem Netz, in dem in einem Zentrum viel Schwungmasse vorhanden ist, und in einem Ausläufer wenig Schwungmassen vorhanden sind, kann die Phasenlage und damit die Frequenz um eine mittlere Phase und damit Frequenz schwingen. Die Phasendifferenz zwischen Netzschwerpunkt und dem langen Ausläufer reagiert dabei sehr sensitiv auf eine Änderung der lokalen Blindleistungsbilanz, aber auch auf eine Änderung der Wirkleistungseinspeisung. Lokal fehlende Schwungmassen führen zu diesem Freiheitsgrad. Eine gewisse Spannungsweichheit gegenüber dem Netzschwerpunkt ist als eine notwendige Voraussetzung für eine lokale Frequenzweichheit erkannt worden. Lokal frequenzweiche Netzabschnitte entstehen somit in elektrischen Versorgungsnetzen, die auch vereinfacht als Netze bezeichnet werden können, in denen die effektive Schwungmasse ungleichmäßig im Netz verteilt ist.

Die Berücksichtigung im Regelungsverhalten wird daher besonders für den lokalen Netzabschnitt mit hoher Umrichterpenetration vorgeschlagen. Besonders wird sie vorgeschlagen für lokale Netzabschnitte, die als Abschnitt mit hoher Umrichterpenetration verbunden mit einem starken Netz charakterisiert werden können. Der übergeordnete Netzabschnitt weist hier einen hohen Schwungmassenindex auf, während der lokale Netzabschnitt stattdessen eine hohe Umrichterpenetration und damit einen geringen Schwungmassenindex aufweist. Bezug nehmend auf obige Erklärung kann der lokale Netzabschnitt hier somit als Ausläufer mit wenig Schwungmasse angesehen sein, der zudem von dem Zentrum mit viel Schwungmasse entfernt ist. Natürlich können hier auch mehrere Zentren mit viel Schwungmasse vorhanden sein, während in dem lokalen Netzabschnitt aber wenig Schwungmasse vorhanden ist.

Weiterhin wurde erkannt, dass global frequenzweiche Netze, Netze mit einem global hohen Anteil aus einer erneuerbaren Erzeugung und wenig Schwungmasse sind. Hier wird also generell viel Leistung aus erneuerbaren Energiequellen eingespeist. Auch hier kann eine Berücksichtigung in dem Regelungverhalten vorteilhaft sein.

Besonders wird eine Berücksichtigung des Regelungsverhaltens derart vorgeschlagen, dass bei einer frequenzabhängigen Leistungsregelung ein geringer Verstärkungsfaktor vorgesehen ist. Dieser Verstärkungsfaktor kann auch als Leistungsverstärkungsfaktor bezeichnet werden. Er kann definiert werden als Quotient einer normierten Leistungsänderung bezogen auf eine normierte Frequenzänderung. Es wird vorgeschlagen, die Leistungsänderung auf die Nennleistung des entsprechenden Einspeisers zu normieren und die Frequenzänderung in Hz anzugeben. Als kleine Leistungsverstärkung wird dann ein Wert angesehen, der kleiner als 1/Hz ist. Von einer großen Frequenzweichheit wird ausgegangen, wenn ihr Wert, ausgehend von der normierten Definition, ein Sekunde beträgt oder darüber liegt.

Gemäß einem Aspekt wird vorgeschlagen, dass das Regelungsverhalten der Einspeiseregelung in Abhängigkeit von einem erneuerbaren Kapazitätsfaktor des lokalen Netzabschnitts oder übergeordneten Netzabschnitts eingestellt wird, wobei der erneuerbare Kapazitätsfaktor definiert ist durch einen Quotient zwischen insgesamt durch alle in den lokalen Netzabschnitt bzw. übergeordneten Netzabschnitt einspeisender Energiequellen fluktuierender Leistung, insbesondere aller Windenergieanlagen und Photovoltaikanlagen, eingespeister Leistung, insbesondere Wirkleistung, und maximal durch alle diese Energiequellen fluktuierender Leistung einspeisbarer Leistung, die sich insbesondere als Summe aller Nennleistungswerte dieser Energiequellen fluktuierender Leistung berechnet. Der erneuerbare Kapazitätsfaktor ist also der Quotient eingespeister Leistung zu maximal einspeisbarer Leistung, jeweils aber nur bezogen auf die Energiequellen fluktuierender Leistung.

Hier wurde besonders erkannt, dass zusätzlich zu der Betrachtung eine Umrichterpenetration und auch zusätzlich zu der Betrachtung eines Umrichtereinspeiseanteils eine generelle Netzsituation und damit Eigenschaft von diesem erneuerbaren Kapazitätsfaktor ableiten lässt. Der erneuerbare Kapazitätsfaktor gibt damit an, wie viel der von den erneuerbaren Energiequellen einspeisbaren Leistung tatsächlich aktuell eingespeist wird.

Mit dem erneuerbaren Kapazitätsfaktor ist somit der aktuelle und bei Betrachtung des lokalen Netzabschnitts der lokale, Arbeitspunkt der erneuerbaren Einspeiseleistung in Bezug auf die installierte Leistung dieser Einspeiser bezeichnet. Ist der Faktor etwa bei 90 %, oder darüber, kann von einer Vollauslastung des Pools der vorhandenen erneuerbaren Energiequellen ausgegangen werden. Dann kann auch davon ausgegangen werden, dass sich die erneuerbare Einspeiseleistung nicht weiter erhöhen kann. Die erneuerbare Einspeiseleistung bezeichnet also die von allen erneuerbaren Energiequellen eingespeiste Leistung. Störungen in negativer Richtung sind damit wahrscheinlicher als in positiver Richtung. Es ist also eher damit zu rechnen, dass sich diese erneuerbare Einspeiseleistung eher verringern als erhöhen wird. Andererseits kann bei einem Kapazitätsfaktor unter 10 % davon ausgegangen werden, dass viele der Einspeiser, die aus erneuerbaren Energien einspeisen, also viele der erneuerbaren Energiequellen, nicht mehr mit dem elektrischen Versorgungsnetz verbunden sind und/oder eine dynamische Fehlerstromeinspeisung reduziert ist.

Dies kann bei dem Regelungsverhalten berücksichtigt werden. Insbesondere kann dies so berücksichtigt werden, dass in Abhängigkeit von dem erneuerbaren Kapazitätsfaktor Steuerungsfunktionen, die zum Steuern eine Wirkleistungseinspeisung verändern, entsprechend angepasst werden. Für die umrichtergeführten Einspeiser kann dann vorgesehen sein, eine Steuerung mit Wirkleistungserhöhung zu vermeiden oder hinsichtlich der Wirkleistung zu begrenzen, wenn der erneuerbare Kapazitätsfaktor des betreffenden Netzabschnitts hoch ist, insbesondere wenigstens oberhalb 80 % liegt. Für die umrichtergeführten Einspeiser kann zudem vorgesehen sein, Steuerungsfunktionen zu vermeiden, die eine Wirkleistungseinspeisung verringern, oder die Verringerung der Wirkleistungseinspeisung zu begrenzen, wenn der erneuerbare Kapazitätsfaktor gering ist, insbesondere unter 20 % liegt. Umgekehrt kann für die Einspeiser, die nicht umrichtergeführt sind, vorgesehen sein, dass diese ihre Wirkleistungseinspeisung erhöhen, insbesondere einen Verstärkungsfaktor zur Wirkleistungseinspeisung erhöhen. Das kann besonders für einen hohen erneuerbaren Kapazitätsfaktor vorgesehen sein, wenn der erneuerbare Kapazitätsfaktor also über 80 % liegt.

Gemäß einem Aspekt wird vorgeschlagen, dass das Regelungsverhalten der Einspeiseregelung wenigstens eine Regelungseigenschaft aufweist aus der Liste der folgenden Regelungseigenschaften.

Eine Regelungseigenschaft der Liste ist, eine Auswahlmöglichkeit zwischen blindleistungspriorisierter Fahrweise und wirkleistungspriorisierter Fahrweise vorzusehen, wobei bei der blindleistungspriorisierten Fahrweise zur Einhaltung einer Scheinleistungsgrenze eingespeiste Wirkleistung begrenzt wird, wohingegen bei der wirkleistungspriorisierten Fahrweise zum Einhalten einer Scheinleistungsgrenze eingespeiste Blindleistung begrenzt wird. Insbesondere wird vorgeschlagen, diese Auswahlmöglichkeit in Abhängigkeit von einer Charakterisierung des lokalen Netzabschnitts vorzunehmen. Oben wurde bereits beschrieben, wann eine blindleistungspriorisierte Fahrweise und wann eine wirkleistungspriorisierte Fahrweise als Reglerverhalten verwendet werden sollte.

Als eine weitere Regelungseigenschaft wird eine Einstellmöglichkeit zwischen einem Anteil einer Blindleistungslimitierung und einem Anteil einer Wirkleistungslimitierung bei Erreichen einer Scheinleistungsgrenze vorgeschlagen. Auch hierzu wurden oben bereits Erläuterungen gegeben. Insbesondere wird vorgeschlagen, eine Blindleistungslimitierung vorzusehen, wenn auch eine blindleistungspriorisierte Fahrweise in Betracht kommt. Ebenso wird vorgesehen, eine Wirkleistungslimitierung vorzusehen, wenn auch eine wirkleistungspriorisierte Fahrweise in Betracht kommt.

Als eine weitere Regelungseigenschaft der Liste wird eine Einstellmöglichkeit eines Spannungstotbandes vorgesehen, wobei das Spannungstotband einen Spannungsbereich um eine Netznennspannung angibt, in dem eine zusätzliche Blindleistungseinspeisung zur Spannungsstützung unterbleibt. Besonders bei einer großen Frequenzweichheit wird vorgeschlagen, ein kleines Spannungstotband einzustellen, um in solchen Netzen die Spannung möglichst stabil und/oder hoch mit einer Festspannungsregelung zu halten, um diese möglichst weit weg von Stabilitätsgrenzen zu halten.

Als eine weitere Regelungseigenschaft aus der Liste wird das Vorsehen einstellbarer Verstärkungsfaktoren zur Spannungsstützung vorgeschlagen, wobei die Verstärkungsfaktoren ein Verhältnis einer vorzunehmenden Blindleistungsänderung zu einer erfassten Spannungsänderung angeben. Somit wird für einen Regler, der eine spannungsabhängige Blindleistungseinspeisung steuert, eine Einstellbarkeit vorgesehen. Hierdurch kann die Wirkung einer spannungsabhängigen Blindleistungsänderung in ihrer Stärke eingestellt werden. Ein besonders niedriger Verstärkungsfaktor ist besonders dann vorzusehen, wenn der lokale Netzabschnitt eine hohe Spannungsweichheit aufweist. In diesem Fall reagiert der lokale Netzabschnitt sehr empfindlich auf Blindleistungsänderungen, sodass diese durch diese geringe Verstärkung gering gehalten werden können.

Erfindungsgemäß wird auch ein Windenergiesystem vorgeschlagen, das wenigstens eine Windenergieanlage aufweist. Das Windenergiesystem kann somit eine einzelne Windenergieanlage oder einen Windpark betreffen. Betrifft es mehrere Windenergieanlagen, so speisen diese über denselben Netzanschlusspunkt ein.

Das Windenergiesystem, also die Windenergieanlage oder der Windpark, ist somit vorgesehen zum Einspeisen elektrischer Leistung in ein elektrisches Versorgungsnetz, wobei das Windenergiesystem einen umrichtergeführten Einspeiser bildet, der mittels wenigstens eines Umrichters elektrische Leistung in das elektrische Versorgungsnetz einspeist, wobei
- der umrichtergeführte Einspeiser an einem Netzanschlusspunkt in einen lokalen Netzabschnitt des elektrischen Versorgungsnetzes einspeist,
- das elektrische Versorgungsnetz
   - den umrichtergeführten Einspeiser und weitere Einspeiser aufweist, zum Einspeisen elektrischer Leistung, die als Einspeiseleistung bezeichnet wird, und
   - Verbraucher zum Verbrauchen elektrischer Leistung, die als Verbrauchsleistung bezeichnet wird,
- der lokale Netzabschnitt eine hohe Umrichterpenetration aufweist, wobei
   - eine Umrichterpenetration ein Verhältnis mittels Umrichter einspeisbarer Leistung zu insgesamt durch alle Einspeiser einspeisbarer Leistung angibt, und
   - eine hohe Umrichterpenetration durch einen Wert von wenigstens 50% definiert ist, und
- eine Einspeiseregelung vorgesehen ist, und das Einspeisen der elektrischen Leistung mittels der Einspeiseregelung erfolgt, die das Einspeisen der elektrischen Leistung in Abhängigkeit von einem Netzzustand des elektrischen Versorgungsnetzes steuert, wobei
   - die Einspeiseregelung ein Reglerverhalten aufweist, das ein Ein-/Ausgangsverhalten der Einspeiseregelung kennzeichnet,
   - der lokale Netzabschnitt durch eine Netzcharakteristik charakterisiert werden kann, und die Netzcharakteristik von wenigstens einer Eigenschaft des lokalen Netzabschnitts abhängt und zusätzlich
      - von wenigstens einer Eigenschaft eines weiteren mit dem lokalen Netzabschnitt verbundenen Netzabschnitts des elektrischen Versorgungsnetzes abhängt, oder
      - davon abhängt, dass kein weiterer Netzabschnitt vorhanden ist, und
   - das Regelungsverhalten in Abhängigkeit von der Netzcharakteristik des lokalen Netzabschnitts ausgewählt oder eingestellt wird.

Gemäß einem Aspekt wird vorgeschlagen, dass das Windenergiesystem, insbesondere die Einspeiseregelung und/oder eine Steuereinheit, die Teil des Windenergiesystems ist, dazu vorbereitet ist, ein Verfahren nach einer der vorstehend beschriebenen Ausführungsformen auszuführen. Damit kann das vorteilhafte Verfahren durch das Windenergiesystem umgesetzt werden. Besonders die Steuereinheit ermöglicht es auch, Steuerungen vorzunehmen oder zu koordinieren, die außerhalb des Windenergiesystems durchzuführen sind.

Die Erfindung wird nachfolgend anhand von Ausführungsformen unter Bezugnahme auf die Figuren beispielhaft näher erläutert.
- Figur 1: zeigt eine Windenergieanlage in einer perspektivischen Darstellung.
- Figur 2: zeigt einen Windpark in einer schematischen Darstellung.
- Figuren 3 - 6: veranschaulichen jeweils ein elektrisches Versorgungsnetz oder einen Teil davon zum Charakterisieren unterschiedlicher lokaler Netzabschnitte.
- Figur 7: zeigt ein Auswahl- und Steuerschema in einer vereinfachten schematischen Darstellung.
- Figur 8: zeigt ein beispielhaftes einstellbares Regelungsverhalten in einem Diagramm.

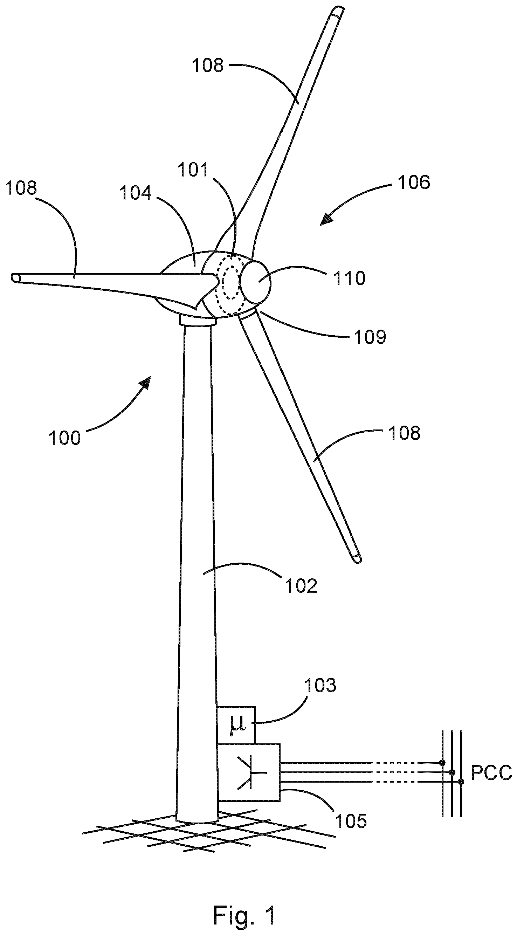

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

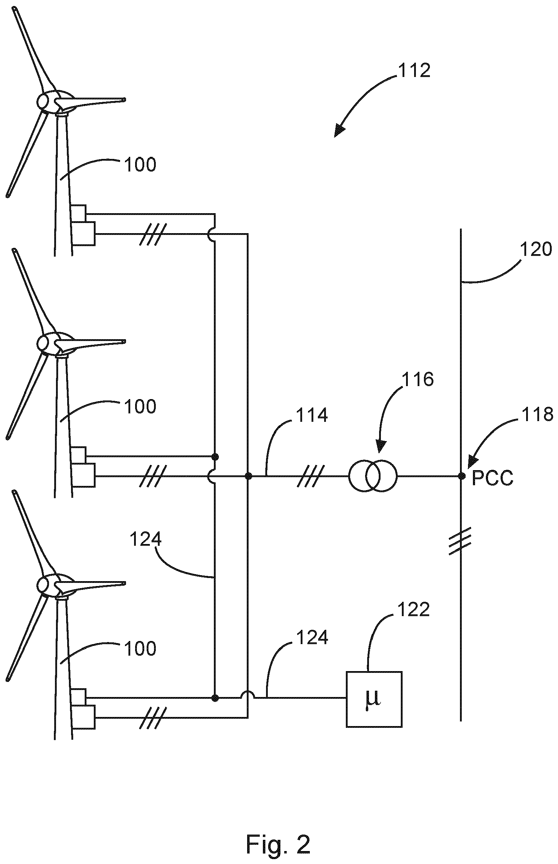

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

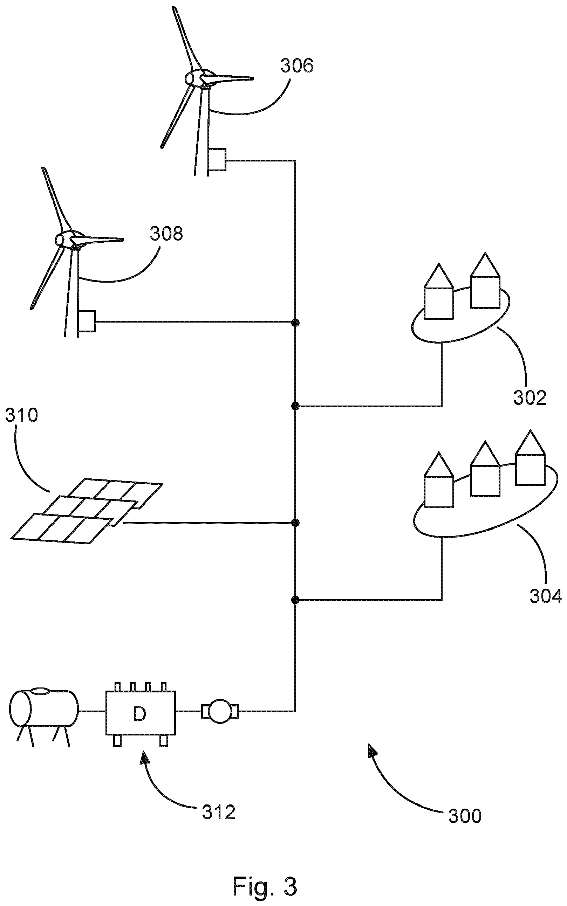

Figuren 3 bis 6 zeigen jeweils ein elektrisches Versorgungsnetz oder einen Teil davon, zumindest jeweils einen lokalen Netzabschnitt. Anhand der Figuren 3 bis 6 sollen unterschiedliche Netztopologien erläutert werden und wie davon abhängig lokale Netzabschnitte charakterisiert werden können. In den vereinfachten Darstellungen fehlt es zur Vereinfachung häufig an Transformatoren und Netztrennschaltern, obwohl an einigen Stellen Transformatoren eingezeichnet sind.

Figur 3 zeigt einen lokalen Netzabschnitt 300, der als Inselnetz charakterisiert werden kann. Dieser beispielhafte lokale Netzabschnitt, der natürlich, wie alle anderen noch gezeigten lokalen Netzabschnitte, stark vereinfacht ist, weist beispielhaft drei Verbraucher und vier Erzeuger auf. Als Verbraucher sind exemplarisch eine erste und eine zweite Ortschaft 302 und 304 dargestellt. Als Erzeuger sind eine erste und eine zweite Windenergieanlage 306 und 308, eine Photovoltaikanlage 310 und ein Dieselgenerator 312 dargestellt. Insoweit ist dieser lokale Netzabschnitt 300 vollständig und abgeschlossen. Er hat keinen Kontakt zu einem anderen externen Netz oder Netzabschnitt. Als Netz wird hier vereinfachend ein elektrisches Versorgungsnetz bezeichnet und als Netzabschnitt entsprechend ein Abschnitt eines elektrischen Versorgungsnetzes. Das gilt auch für die übrigen Figuren und Ausführungsformen.

Dieser lokale Netzabschnitt 300, der als Inselnetz ausgebildet ist, bildet insoweit ein typisches Inselnetz. Es wird möglichst versucht, die Verbraucher, hier nur Ortschaften, durch Windenergieanlagen und Photovoltaikanlagen zu versorgen. Wenn das nicht möglich ist, kann der Dieselgenerator 312 anspringen und die Versorgung sicherstellen. Es kommt auch in Betracht, dass der Dieselgenerator immer läuft, um dadurch als Netzbildner zu fungieren. Bei Bedarf kann dann seine Leistungsabgabe verändert werden.

Insoweit weist dieser lokale Netzabschnitt 300 eine hohe Umrichterpenetration auf, davon ausgehend, dass der Dieselgenerator in seiner Nennleistung jeweils geringer als die beiden Windenergieanlagen 306 oder 308 und auch die Photovoltaikanlage 310 ist. Somit sind für diesen lokalen Netzabschnitt 300, der als Inselnetz charakterisiert werden kann, die Verhaltensweisen von umrichtergeführten Einspeisern dominant.

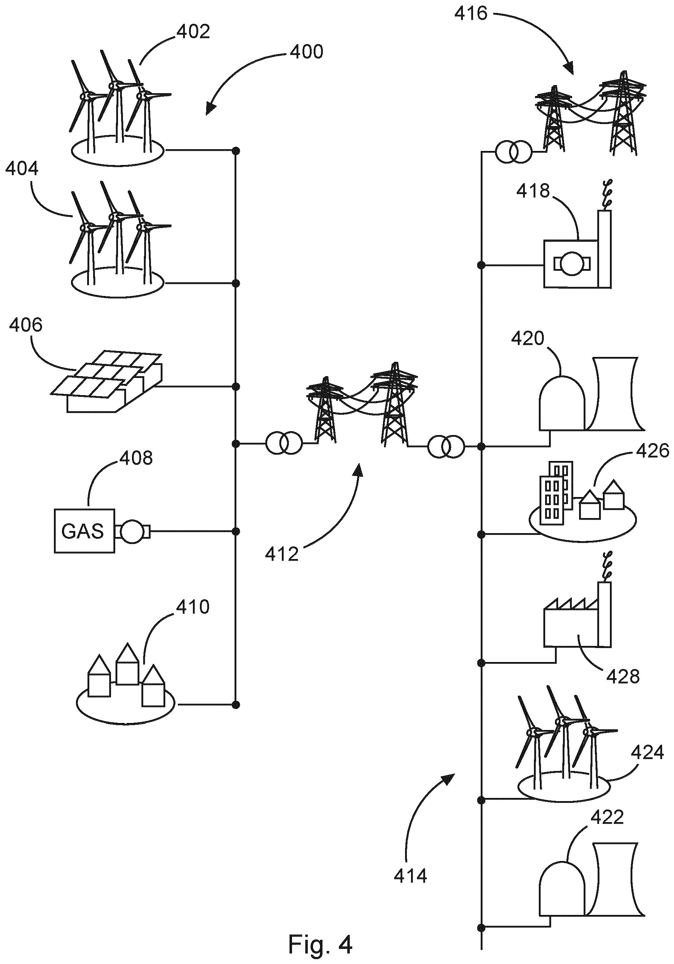

Figur 4 zeigt einen lokalen Netzabschnitt 400, der als Abschnitt mit hoher Umrichterpenetration verbunden mit einem starken Netz charakterisiert werden kann. Dieser lokale Netzabschnitt 400 weist einen ersten und zweiten Windpark 402 und 404 auf, sowie eine Photovoltaikanlage 406. Außerdem ist noch eine Gasturbine 408 vorgesehen, sowie als Verbraucher eine Ortschaft 410. Auch hier wird davon ausgegangen, dass die Gasturbine 408 eine geringere Nennleistung aufweist als zumindest jeder der einzelnen Windparks 402 und 404, und auch als die Photovoltaikanlage 406. Somit weist auch dieser lokale Netzabschnitt 400 eine hohe Umrichterpenetration auf.

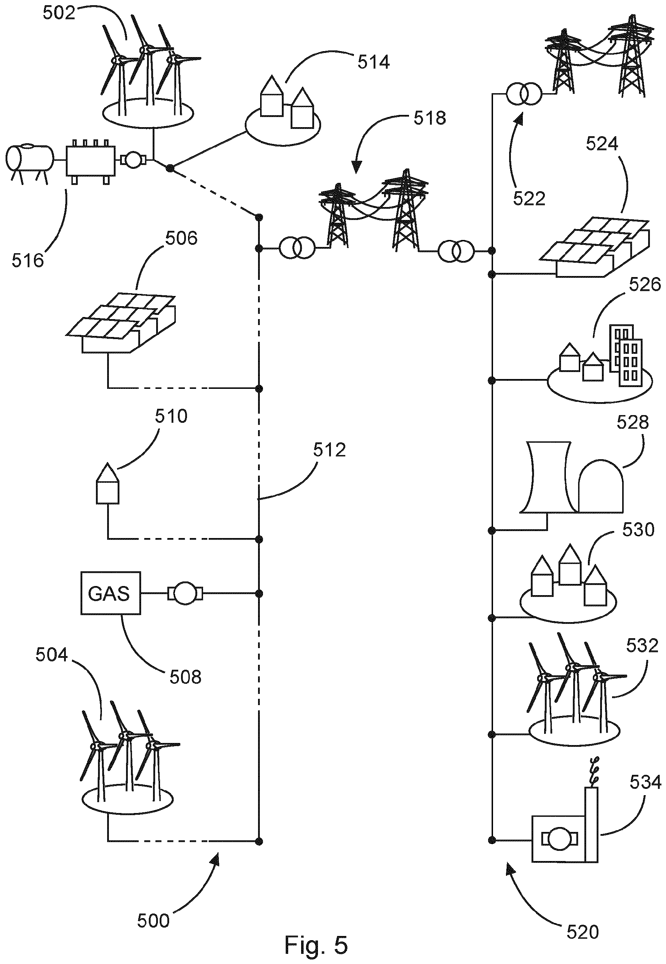

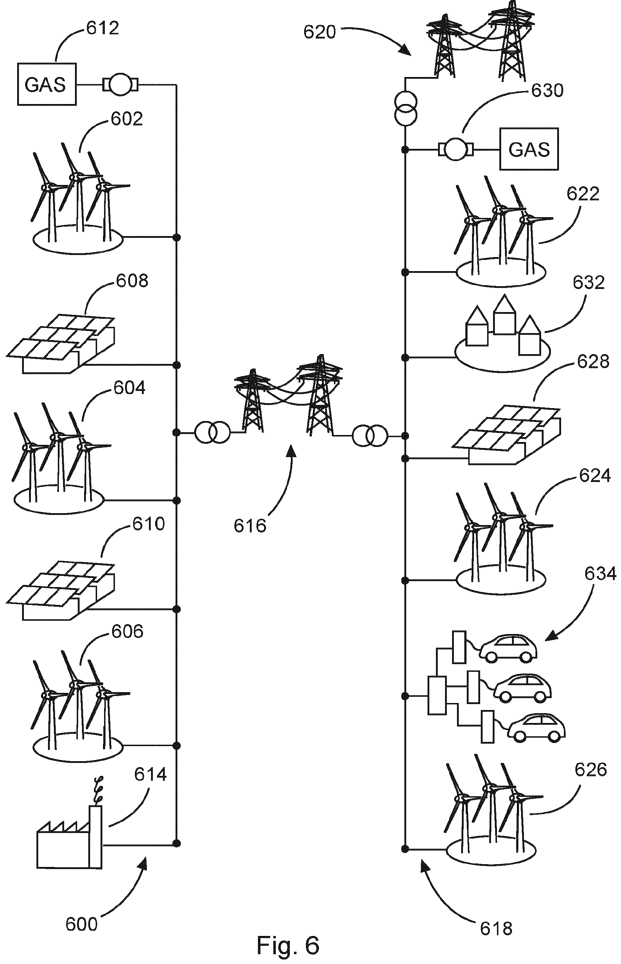

Der lokale Netzabschnitt 400 ist über eine erste Hochspannungsverbindung 412 mit einem übergeordneten Netzabschnitt 414 verbunden. Die erste Hochspannungsverbindung 412 soll dabei veranschaulichen, dass der übergeordnete Netzabschnitt 414 übergeordnet ist. Eine zweite Hochspannungsverbindung 416 soll symbolisieren, dass der übergeordnete Netzabschnitt 414 über diese zweite Hochspannungsverbindung 416 mit weiteren Abschnitten eines elektrischen Versorgungsnetzes verbunden ist und dadurch auch Teil dieses elektrischen Versorgungsnetzes ist. Die erste und zweite Hochspannungsverbindung 412 und 416 dienen der Veranschaulichung und sie schließen nicht aus, dass beispielsweise der übergeordnete Netzabschnitt 414 selbst eine Hochspannung aufweist, sei es vollständig oder nur in Teilabschnitten. Diese Symbolik gilt auch sinngemäß für die noch folgenden Figuren 5 und 6.

Jedenfalls weist der beispielhaft dargestellte übergeordnete Netzabschnitt 414 ein erstes, zweites und drittes Großkraftwerk 418, 420 bzw. 422 auf. Es ist auch ein Windpark 424 vorhanden. Als Verbraucher sind eine Stadt 426 und eine Fabrik 428 vorhanden.

In der Annahme, dass jedes der drei Großkraftwerke 418, 420 und 422 eine Nennleistung aufweist, die jeweils wenigstens so groß ist wie die des Windparks 424, sind somit die Großkraftwerke dominant. Diese Großkraftwerke speisen durch einen direkt mit dem Netz gekoppelten Synchrongenerator ein und dadurch ergibt sich für den übergeordneten Netzabschnitt 414 ein großer Schwungmassenindex, der somit wenigstens 3/4 beträgt, nämlich dann, wenn die Nennleistungen der drei Großkraftwerke 418, 420 und 422 jeweils genauso groß wären wie die Nennleistung des Windparks 424. Sofern sie aber größer sind, liegt der Schwungmassenindex entsprechend noch höher als 3/4, also höher als 75 %.

Somit zeigt Figur 4 mit dem lokalen Netzabschnitt 400 einen lokalen Netzabschnitt, der als Abschnitt mit hoher Umrichterpenetration verbunden mit einem starken Netz charakterisiert werden kann.

Anhand dieser Figur 4, aber auch anhand der noch folgenden Figuren 5 und 6, ist erkennbar, dass die Charakterisierung durch die vorhandene Topologie im Wesentlichen bestimmt ist, also welche Art Einspeiser vorhanden sind. Es ist aber weder in dem lokalen Netzabschnitt 400 noch in dem übergeordneten Netzabschnitt 414 nur ein Einspeisertyp ausschließlich vorhanden. Bei dem lokalen Netzabschnitt 400 dominieren die umrichtergeführten Einspeiser, während bei dem übergeordneten Netzabschnitt 414 die konventionellen Einspeiser dominieren. Das hat auch Auswirkung auf einen Umrichtereinspeiseanteil, der aussagt, wie viel Leistung von den jeweiligen Einspeisertypen tatsächlich aktuell eingespeist werden kann.

Der Umrichtereinspeiseanteil ist dadurch aber nicht festgelegt. Je nach Situation könnte jeweils auch der andere Einspeisertyp dominieren. Gibt es wenig Wind, kann bei dem lokalen Netzabschnitt 400 der Figur 4 in der Nacht die Gasturbine 408 dominieren. Gibt es viel Wind und wenig Leistungsbedarf, z. B. in einer stürmischen Nacht, kann bei dem übergeordneten Netzabschnitt 414 der Windpark 424 dominieren und somit zu einem hohen Umrichtereinspeiseanteil führen. All das kann zusätzlich zu der Charakterisierung des lokalen Netzabschnitts, die sich dadurch nicht ändert, berücksichtigt werden. Das gilt auch für die beiden folgenden Ausführungen, die im Zusammenhang mit den Figuren 5 und 6 beschrieben werden.

Figur 5 zeigt, auf der linken Seite, einen lokalen Netzabschnitt 500, der als Abschnitt mit lokal hoher Umrichterpenetration verbunden mit einem schwachen Netz charakterisiert werden kann. Dieser lokale Netzabschnitt weist einen ersten und zweiten Windpark 502 bzw. 504 auf. Außerdem ist eine Photovoltaikanlage 506 und eine Gasturbine 508 als weiterer Einspeiser vorhanden. Zudem ist eine kleine Ansiedlung 510 an den lokalen Netzabschnitt 500 angeschlossen.

Die beiden Windparks 502 und 504 sowie die Photovoltaikanlage 506 als auch die kleine Ansiedlung 510 sind symbolisch jeweils über teilweise gestrichelte Linien an einem Hauptstrang 512 angeschlossen. Der Hauptstrang 512 weist teilweise auch gestrichelte Linien auf. Damit soll angedeutet werden, dass diese drei Einspeiser und auch die kleine Ansiedlung 510 in großer örtlicher Entfernung zueinander und insbesondere zu dem Hauptstrang 512 angeordnet sind. Im Grunde ist jeder der beiden Windparks 502, 504, die Photovoltaikanlage 506 und auch die kleine Ansiedlung 510 über eine lange Stichleitung an dem Hauptstrang 512 angeschlossen. Eine solche Stichleitung kann beispielsweise 100 km lang sein.

Dadurch ergibt sich für die genannten drei Erzeuger 502, 504 und 506 ein kleines Kurzschlussstromverhältnis, denn der lokale Netzabschnitt 500 kann aufgrund der langen Stichleitungen nicht so viel Kurzschlussleistung an diesen Erzeugern bereitstellen. Solche Strukturen können besonders in großen, dünn besiedelten Gebieten auftreten, in denen die jeweiligen regenerativen Erzeuger an entsprechend geeigneten Stellen aufgestellt sind, die weit voneinander entfernt sein können. Lediglich die Gasturbine 508 wird sinnvollerweise an einem geeigneten Punkt unmittelbar neben oder an dem Hauptstrang 512 aufgestellt werden.

Der lokale Netzabschnitt 500 ist somit ein Abschnitt mit lokal hoher Umrichterpenetration. Jeder der beiden Windparks 502 und 504 als auch die Photovoltaikanlage 506 haben für sich genommen eine hohe Umrichterpenetration, die nämlich 100 % betragen kann. Es kommt aber auch in Betracht, dass ein solcher Windpark oder eine solche Photovoltaikanlage nicht vollständig solitär angeordnet ist, sondern dass eine Siedlung in der Nähe ist und gegebenenfalls, um beispielsweise die Versorgungsautarkie der Siedlung zu sichern, noch an diesem Generator angeordnet ist. Das ist für den ersten Windpark 502 durch die Ortschaft 514 und den Dieselgenerator 516 veranschaulicht. In diesem Fall führt der Dieselgenerator 516 dazu, dass bei dem ersten Windpark 502 die Umrichterpenetration zumindest unter 100 % ist. Da ein Dieselgenerator aber häufig eine geringere Nennleistung als eine Windenergieanlage aufweist und daher eine noch viel geringere Nennleistung als ein Windpark aufweist, ist die Umrichterpenetration im Bereich des ersten Windparks 502 trotzdem noch sehr hoch.

Der lokale Netzabschnitt 500 ist über eine erste Hochspannungsverbindung 518 mit einem übergeordneten Netzabschnitt 520 verbunden. Eine zweite Hochspannungsverbindung 522 veranschaulicht, dass der übergeordnete Netzabschnitt 520 mit weiteren Teilen eines elektrischen Versorgungsnetzes verbunden ist.

Der übergeordnete Netzabschnitt 520 weist eine Photovoltaikanlage 524, eine Stadt 526, einen ersten konventionellen Erzeuger 528, eine Ortschaft 530, einen Windpark 532 und einen zweiten konventionellen Erzeuger 534 auf.

Der übergeordnete Netzabschnitt 520 weist somit im Grunde eine gute Mischung unterschiedlicher Erzeuger auf. Bei Annahme jeweils gleicher Nennleistung der vier genannten Erzeuger ergibt sich eine Umrichterpenetration von 50 % und auch ein Schwungmassenindex von 50 %. Der lokale Netzabschnitt 500 lässt sich somit als Abschnitt mit lokal hoher Umrichterpenetration verbunden mit einem schwachen Netz charakterisieren. Der übergeordnete Netzabschnitt 520 muss zwar als solcher kein schwacher Netzabschnitt sein, aber er ist auch nicht so dominant, dass er den lokalen Netzabschnitt 500 in großem Maße stützen könnte. Es kommt das Problem hinzu, dass eine Stützleistungsübertragung auch dadurch begrenzt ist, dass der lokale Netzabschnitt 500 lokal weit verteilte Erzeuger aufweist, die dabei mit einem kleinen Kurzschlussstromverhältnis angeschlossen sind.

Es kommt auch in Betracht, dass die Übertragungsleitung 518 sehr lang ist und der Netzabschnitt 520 als Ganzes sehr schwach angebunden ist. Auch wenn der Netzabschnitt 520 einen hohen Schwungmassenindex aufweisen würde, wäre eine Stützung dann über die eine Leitung 518 kaum möglich.

Figur 6 zeigt einen lokalen Netzabschnitt 600, nämlich dort auf der linken Seite, der als Abschnitt mit hoher Umrichterpenetration verbunden mit einem Netz mit hoher Umrichterpenetration charakterisiert werden kann. Dieser lokale Netzabschnitt weist einen ersten, zweiten und dritten Windpark 602, 604 und 606 auf, sowie eine erste und zweite Photovoltaikanlage 608 und 610. Außerdem ist eine Gasturbine 612 vorhanden sowie eine Fabrik 614 als Verbraucher. Der lokale Netzabschnitt 600 weist somit eine hohe Umrichterpenetration auf. Bei viel Wind und viel Sonne wird mehr Leistung erzeugt werden als die Fabrik614 verbrauchen kann. Der lokale Netzabschnitt 600 wird dann, um nicht abgeregelt werden zu müssen, Leistung exportieren. Das kann über die erste Hochspannungsverbindung 616 zum übergeordneten Netzabschnitt 618 erfolgen. Möglicherweise muss der übergeordnete Netzabschnitt 618 selbst auch Leistung exportieren und dann kann die Leistung über die zweite Hochspannungsverbindung 620 an einen weiteren Netzabschnitt eines elektrischen Versorgungsnetzes übertragen werden.

Der hier dargestellte übergeordnete Netzabschnitt 618 weist selbst einen vierten, fünften und sechsten Windpark 622, 624 und 626 auf, sowie eine Photovoltaikanlage 628. Zudem ist noch eine Gasturbine 630 vorgesehen. Als Verbraucher ist eine Ortschaft 632 sowie eine Elektrotankstelle 634 vorhanden.

Der übergeordnete Netzabschnitt 618 weist somit selbst eine hohe Umrichterpenetration auf. Die beiden Verbraucher, also die Ortschaft 632 und die Elektrotankstelle 634, werden deutlich weniger Leistung verbrauchen als diese umrichtergeführten bzw. regenerativen Erzeuger im Normalfall erzeugen können. Der übergeordnete Netzabschnitt 618 wird also selbst auch häufig Leistung exportieren, nämlich über die zweite Hochspannungsverbindung 620.

Der lokale Netzabschnitt 600 kann somit als Abschnitt mit hoher Umrichterpenetration verbunden mit einem Netz mit hoher Umrichterpenetration charakterisiert werden. Vorsorglich wird darauf hingewiesen, dass der Begriff "Netz" in dieser und anderen Charakterisierungen nicht bedeuten soll, dass das gesamte Netz die entsprechende Eigenschaft, hier also die hohe Umrichterpenetration, aufweist, sondern dass der übergeordnete Netzabschnitt diese Eigenschaft, hier also die hohe Umrichterpenetration aufweist.

In der Fig. 6 kann besonders gut eine Auswirkung verdeutlicht werden, die sich ergibt, wenn sich die Windgeschwindigkeit und/oder die Sonneneinstrahlung stark ändern. Dann schwankt nämlich besonders der Export von Leistung sowohl für den lokalen Netzabschnitt 600 als auch den übergeordneten Netzabschnitt 618. Dadurch, dass eine Mischung aus Windparks und Photovoltaikanlagen besteht, ergibt sich zwar ein gewisser Ausgleich, weil beide Energiequellen eher gegenläufig auftreten, aber insgesamt bleibt dennoch eine starke Schwankung, die zu den genannten Schwankungen der Exportleistung führen können. Die aktuelle Situation des lokalen Netzabschnitts 600 der Figur 6 kann sich gut durch einen erneuerbaren Kapazitätsfaktor abbilden lassen. Er bezeichnet die Summe der Leistungen, die durch den ersten, zweiten und dritten Windpark 602, 604 und 606 sowie die erste und zweite Photovoltaikanlage 608 und 610 eingespeist werden, zur Summe ihrer Nennleistungen.

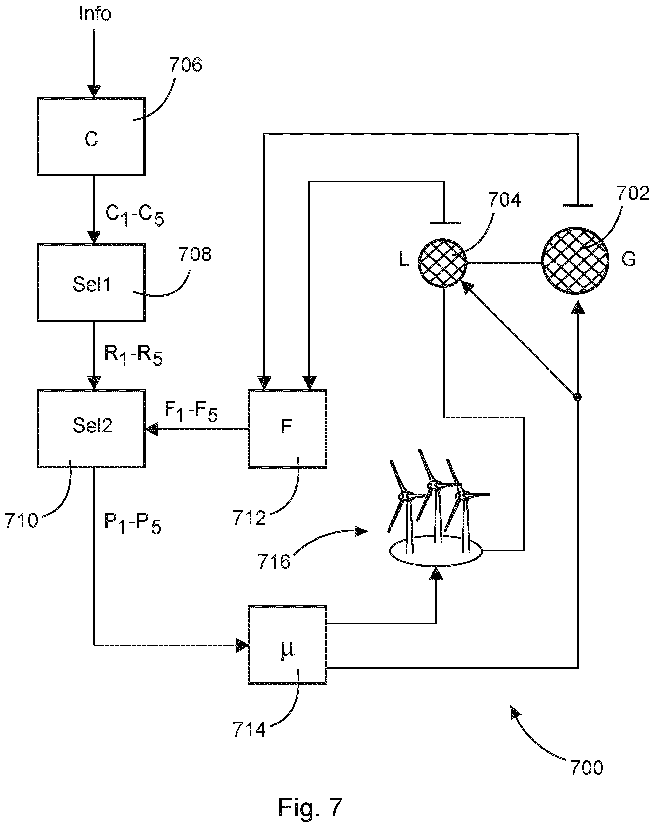

Figur 7 zeigt in sehr vereinfachter Darstellung ein Auswahl- und Steuerdiagramm 700. Es geht aus von einem elektrischen Versorgungsnetz 702 mit einem verbundenen lokalen Netzabschnitt 704. Das elektrische Versorgungsnetz 702 wird als übergeordnetes Netz verstanden, das auch als globales Netz bezeichnet werden kann, ohne dass es den ganzen Erdball umspannen muss und deswegen durch den Buchstaben G gekennzeichnet ist.

Der lokale Netzabschnitt 704 kann charakterisiert werden. Diese Charakterisierung hängt im Wesentlichen von der Topologie ab und wird sich im Wesentlichen nicht ändern. Sie kann sich zwar durch Öffnen und Trennen von Netztrennschaltern ändern, im Wesentlichen ist aber davon auszugehen, dass die meisten Netztrennschalter überwiegend geschlossen sind.

Jedenfalls kann eine solche Charakterisierung in dem Charakterisierungsblock 706 gespeichert sein. Das schließt nicht aus, dass diese Charakterisierung auch geändert werden kann. Eine Möglichkeit ist, dass entsprechende Informationen in diesen Charakterisierungsblock 706 eingegeben werden, um dann die entsprechende Charakterisierung zu bestimmen. Solche Informationen können in diesen Charakterisierungsblock 706 eingegeben werden. Dazu können beispielsweise gespeicherte Werte verwendet werden, oder Messwerte, was hier in der Figur 7 nicht weiter verdeutlicht wird.

Der Charakterisierungsblock kann dann eine entsprechende Charakterisierung feststellen oder anderweitig bereitstellen und diese ausgeben. Das ist durch beispielhafte Charakterisierungen C₁ bis C₅ veranschaulicht.

Diese Charakterisierungen können dann in den ersten Selektionsblock 708 eingegeben werden. Der erste Selektionsblock 708 kann insbesondere in Abhängigkeit von der erhaltenen Charakterisierung einen Regler auswählen bzw. eine Reglereigenschaft auswählen und das Ergebnis ausgeben. Diese Regler oder Reglereigenschaften, die dort ausgegeben werden können, sind als R₁ bis R₅ symbolisch genannt. Es müssen allerdings nicht unbedingt fünf Reglertypen sein, aus denen ausgewählt wird, sondern es kann auch eine größere oder kleinere Anzahl sein. Das gilt im Übrigen sinngemäß auch für die Charakteristika, die durch C₁ bis C₅ veranschaulicht sind.

So kann also beispielsweise ein Reglertyp, z. B. R₂, ausgewählt und in den zweiten Selektionsblock 710 eingegeben werden. Der zweite Selektionsblock berücksichtigt zudem weitere Merkmale, die ihm als Merkmale F₁ bis F₅ eingegeben werden. Auch das ist nur symbolisch zu verstehen. Insbesondere kommt hier aber in Betracht, dass nicht nur eines der Merkmale, sondern tatsächlich mehrere oder alle grundsätzlich in Betracht kommenden Merkmale eingegeben werden.

Solche Merkmale F₁ bis F₅ können ein Netzzustand sein, wie ein Umrichtereinspeiseanteil. Der Umrichtereinspeiseanteil bezieht sich auf die aktuell durch Umrichtereinspeiser eingespeiste Leistung. Eines der Merkmale kann auch die Größe einer vertikalen Netzlast betreffen. Diese vertikale Netzlast kann die Leistungsübertragung von dem lokalen Netzabschnitt 704 zum übrigen elektrischen Versorgungsnetz 702 bezeichnen.

Ein weiteres Merkmal kann eine Information über die Spannungsweichheit des lokalen Netzabschnitts sein. Ein noch weiteres Merkmal kann eine Information über die Frequenzweichheit des lokalen Netzabschnitts sein. Auch ein erneuerbarer Kapazitätsfaktor kann eine Eigenschaft sein.

All diese Eigenschaften können aktuell an dem lokalen Netzabschnitt 704 oder dem übrigen elektrischen Versorgungsnetz 702 erfasst werden und in den Erfassungsblock 712 zum Erfassen der Merkmale eingegeben werden. Der Erfassungsblock 712 ist insoweit ein Erfassungsblock für die symbolisch genannten Merkmale F₁ bis F₅. Es können natürlich auch mehr oder weniger Merkmale sein.

Der zweite Selektionsblock 710 berücksichtigt nun den Reglertyp, den er von dem ersten Selektionsblock 708 erhalten hat, und zusätzlich die weiteren Merkmale F₁ bis F₅. Als Ergebnis kann er eine Parametrierung oder andere Einstellung eines zu verwendenden Regelungsverhaltens ausgeben. Das ist durch die Parametrierungen P₁ bis P₅ symbolisiert, die der zweite Selektionsblock 710 ausgibt. Insbesondere wird also nur eine Parametrierung, also beispielsweise ein P₃, ausgegeben.

Es ist aber nur eine Möglichkeit, dass der erste Selektionsblock einen Reglertyp auswählt und der zweite Selektionsblock diesen parametriert. Es kommt auch in Betracht, dass der zweite Selektionsblock Ergänzungen vornimmt, wie beispielsweise spezielle Fehlerstrategien, die zu dem Reglertyp ergänzt werden. Der Reglertyp kann beispielsweise eine frequenzabhängige Leistungsregelung vorsehen. Diese kann durch den zweiten Selektionsblock parametriert werden und/oder es kann zusätzlich ein Verhalten zum Durchsteuern eines Netzfehlers ergänzt werden.

Es kommt aber auch in Betracht, dass der erste Selektionsblock mehrere Reglertypen zur Wahl stellt und diese an den zweiten Selektionsblock 710 übergibt. Der zweite Selektionsblock kann dann eine weitere Auswahl vornehmen und/oder eine Parametrierung vornehmen und/oder ein Regelungsverhalten ergänzen.

Jedenfalls wird das Ergebnis, das der zweite Selektionsblock 710 ausgibt, an eine übergeordnete Steuereinheit 714 gegeben. Die übergeordnete Steuereinheit kann selbst ein Einspeiseregler sein. Vorzugsweise verteilt sie aber das Regelungsverhalten, das durch den zweiten Selektionsblock 710 vorgegeben wurde, an weitere Einheiten. Dazu gehört, das Regelungsverhalten an konkrete Einspeiser weiterzugeben, nämlich an den exemplarisch eingezeichneten Windpark 716.

Der Windpark 716 kann selbst einen Parkregler oder eine zentrale Parksteuereinheit aufweisen und dort einen Teil des Regelungsverhaltens implementieren und einen weiteren Teil an die einzelnen Windenergieanlagen weitergeben. Besonders kommt eine Aufteilung in Betracht, bei der eine generelle Leistungssteuerung und generelle Blindleistungssteuerung, die der Windpark vornehmen sollte, durch einen solchen zentralen Parkregler gesteuert wird. Reglerverhalten, die besonders das Durchsteuern eines Netzfehlers betreffen, werden an die einzelnen Windenergieanlagen übergeben, damit diese auf entsprechende Messwerte schnell reagieren können und das beispielhaft genannte Fehlerdurchsteuern umsetzen können.

Außerdem kann das Regelungsverhalten oder ein Teil davon von der übergeordneten Steuereinheit 714 an den lokalen Netzabschnitt 704 und das übrige elektrische Versorgungsnetz 702 gegeben werden. Hier ist besonders zu beachten, dass unterschiedliche Aufgaben in dem Regelungsverhalten beinhaltet sein können.

Der lokale Netzabschnitt kann besonders solche Aufgaben erhalten, die schon exemplarisch für den Windpark 716 erläutert wurden. Es kommen aber weitere Möglichkeiten wie das Betätigen von Netztrennschaltern hinzu. Auch das Koordinieren mehrerer regenerativer Einspeiser des lokalen Netzabschnitts kommt in Betracht. Hierunter kann das Einstellen des Anteils einer spannungsprägenden Fahrweise zu einer stromprägenden Fahrweise gehören. Wenn ein solcher Anteil für den gesamten lokalen Netzabschnitt vorgesehen ist, müssen alle umrichtergeführten Einspeiser des lokalen Netzabschnitts dafür koordiniert werden. Es kann häufig nicht ausreichen, dass einfach jeder umrichtergeführte Einspeiser für sich das entsprechende Verhältnis umsetzt, denn es können umrichtergeführte Einspeiser vorhanden sein, die für eine spannungsprägende Einspeisung nicht geeignet sind und ihren Anteil müssen dann andere umrichtergeführte Einspeiser übernehmen.

Das übrige elektrische Versorgungsnetz 702 kann beispielsweise aus einem Regelungsverhalten ableiten, inwieweit es die Aufnahme einer Leistungsübertragung umsetzen können muss. Liegt beispielsweise eine Charakterisierung des lokalen Netzabschnitts als Abschnitt mit hoher Umrichterpenetration verbunden mit einem starken Netz vor, und wurde zudem ein hoher Umrichtereinspeiseanteil für den lokalen Netzabschnitt erkannt, so kann das für die Regelungsstrategie, also das abgeleitete Regelungsverhalten, bedeuten, dass der zum lokalen Netzabschnitt übergeordnete Netzabschnitt eine hohe Exportleistung erwartet. Das kann zumindest bedeuten, dass notwendige Übertragungsstrecken möglichst nicht aufgetrennt werden.

Es kann für den übergeordneten Netzabschnitt auch bedeuten, dass er konventionelle Erzeugerzumindest teilweise herunterfährt, um ihre Primärenergie zu schonen, wenn in dem lokalen Netzabschnitt entsprechend viel regenerative Energie bzw. Leistung verfügbar ist.

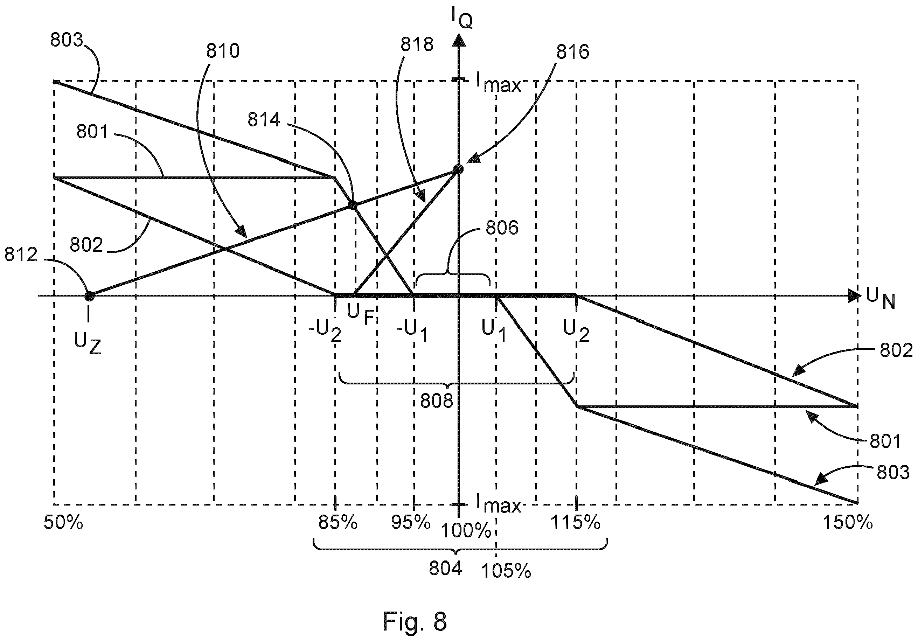

Figur 8 zeigt ein Diagramm für eine von der Netzspannung abhängige Blindleistungseinspeisung, die auch zum Durchsteuern eines Fehlerfalls vorgesehen ist. Dafür ist jeweils ein Blindstrom I_{Q} in Abhängigkeit von der Netzspannung U_{N} dargestellt. Besonders sind eine erste Kennlinie 801 für eine erste Windenergieanlage, eine zweite Kennlinie 802 für eine zweite Windenergieanlage und eine dritte Kennlinie 803 als resultierende Gesamtkennlinie dargestellt. Hier wird besonders vorgeschlagen, für mehrere umrichtergeführte Einspeiser, hier also eine erste und eine zweite Windenergieanlage, unterschiedliche Kennlinien vorzugeben, die sich zu einer vorteilhaften Gesamtkennlinie ergänzen. Dafür sind unterschiedliche Spannungsbänder vorgesehen, die einen Spannungsbandbereich 804 aufspannen. Das Diagramm zeigt dafür in seinem Ursprung für die Netzspannung den Wert 100 %, also Nennspannung. Die Blindleistung I_{Q} weist im gezeigten Ursprung den Wert null auf. Werte sind für den Blindstrom nicht eingetragen. Das Diagramm ist allerdings linear in seiner Darstellung, sowohl für die Spannung als auch für den Strom, und der Blindstrom erreicht jeweils seinen positiven oder negativen Maximalwert. Das Diagramm reicht also dem Betrage nach jeweils bis zum maximalen Blindstrom der Gesamtkennlinie.

Für die erste Kennlinie 801 und damit für die erste Windenergieanlage ist ein erster Spannungstotbandbereich zwischen 95 % und 105 % vorgesehen. Der Wert von 95 % bildet somit eine erste untere Referenzspannung und der Wert von 105 % eine erste obere Referenzspannung. Diese Werte definieren somit ein erstes Totband 806. Die erste Kennlinie 801 ist somit so vorgegeben, dass innerhalb des ersten Totbandes 806 kein Blindstrom eingespeist wird. Ab der ersten oberen Referenzspannung U₁ wird somit ein negativer Blindstrom gemäß der ersten Kennlinie 801 eingespeist. Dieser nimmt dem Betrage nach proportional mit weiter ansteigender Spannung zu. Die Zunahme des negativen Blindstroms wird über einen k-Faktor festgelegt, der hier 10 beträgt (k = 10). Der Blindstrom steigt also bei einer 10%igen Spannungserhöhung von null auf seinen Maximalwert an (dem Betrage nach). Der Strom steigt also von 0 auf 1, während sich die Spannung um 0,1 erhöht. Damit ist der Blindstrom der ersten Kennlinie bei einer Netzspannung von 115 % der Netznennspannung dem Betrage nach an seinem Maximum angekommen. Dieser Wert von 115 % markiert hier eine zweite obere Referenzspannung.

Die zweite Kennlinie 802 ist so ausgelegt, dass sie ein zweites Totband 808 aufweist. Das zweite Totband 808 reicht somit von einer zweiten unteren Referenzspannung -U₂ bis zu einer zweiten oberen Referenzspannung U₂. Somit ist der Blindstrom der zweiten Kennlinie 802 in dem zweiten Totband 808 null und steigt dem Betrage nach ab der zweiten oberen Referenzspannung U₂ mit weiter zunehmender Netzspannung dem Betrage nach an. Hier ist ein k-Faktor von 3,5 vorgesehen (k = 3,5). Der Blindstrom steigt also dem Betrage nach von null auf seinen Maximalwert bei einer Spannungserhöhung von 115 % auf 150 %, also bei einer Spannungserhöhung um 35 %.

Aus der Überlagerung ergibt sich die gemeinsame Kennlinie 803. Diese hat ebenfalls das erste Totband 806, steigt dann aber dem Betrage nach ab der ersten oberen Referenzspannung U₁ bis zur zweiten oberen Referenzspannung U₂ mit dem k-Faktor k = 10 an. Ab der zweiten oberen Referenzspannung U₂ steigt sie mit dem k-Faktor k = 3,5 an, um dann bei 150 % betragsmäßig ihren Maximalwert zu erreichen.

Für Spannungsabfälle sind alle drei Kennlinien punktsymmetrisch zum Ursprung des Diagramms. Das muss nicht unbedingt so sein, aber in dem gezeigten Diagramm ist das der Fall und das ist auch generell eine bevorzugte Ausführungsform. Die erste Kennlinie 801 steigt also mit einem k-Faktor k = 10 ab der ersten unteren Referenzspannung -U₁ mit weiter abfallender Netzspannung an, nämlich bis zur zweiten unteren Referenzspannung.

Von da an steigt dann die zweite Kennlinie 802 mit weiter abfallender Netzspannung mit dem k-Faktor k = 3,5 bis zu seinem Maximalwert bei 50 % Netzspannung an. Es ergibt sich die gezeigte Gesamtkennlinie 803.

Das Diagramm reicht somit von einer Spannung von 50 % bis 150 % und damit weit über einen normalen Betriebsbereich der Netzspannung hinaus. Insoweit sind die gezeigten Kennlinien für einen Fehlerfall vorgesehen und können auch als FRT-Kennlinie jeweils bezeichnet werden. Insoweit zeigt das Diagramm der Figur 8 also eine erste FRT-Kennlinie 801, eine zweite FRT-Kennlinie 802 und eine gesamte FRT-Kennlinie 803. Diese Kennlinien zeigen also das Verhalten im Fehlerfall, um diesen möglichst zu durchsteuern.

Zusätzlich ist eine Zuschaltkennlinie 810 dargestellt. Diese Zuschaltkennlinie 810 zeigt eine Spannungs-Blindleistungscharakteristik des elektrischen Versorgungsnetzes nach einer Zuschaltung, besonders nach einem Fehler. Bei der Zuschaltspannung Uz liegt ein Zuschaltarbeitspunkt vor, bei dem die Spannung den gezeigten Wert, hier also etwa 55 %, aufweisen kann, und der Blindstrom null ist. Dieser Zuschaltarbeitspunkt 812 liegt aber kürzer als 30 ms vor. Dann wird der Blindstrom in Abhängigkeit von der Zunahme der Netzspannung erhöht, nämlich gemäß der gezeigten Zuschaltkennlinie 810. Es wird dann der FRT-Arbeitspunkt 814 bei der FRT-Spannung U_{F} erreicht, die etwa 87 % in dem gezeigten Beispiel aufweist. Schließlich wird der Spannungsregelungsendpunkt 816 erreicht, wenn die Spannung Nennspannung erreicht hat.

In dem Diagramm ist zudem eine mögliche Spannungsregelung der ersten Windenergieanlage durch eine Spannungsregelungskennlinie 818 gezeigt. Mit dieser Kennlinie kann, wenn kein Fehlerdurchsteuern (FRT) vorliegt, die Netzspannung auf den Wert der FRT-Spannung U_{F} zurückgefahren werden. Die Kennlinien 801 und 802 beschreiben jeweils das dadurch vorgegebene spannungsabhängige Verhalten der jeweiligen Windenergieanlagen im Windpark. Dieses Verhalten wird im Fehlerfall oder bei einer Störung aktiviert, zum Durchsteuern des Fehlers (FRT), bzw. der Störung. Ist der Fehler bzw. die Störung aber überwunden und der Fehlerfall bzw. Störfall, zumindest teilweise, beendet, kann dieses Verhalten und damit die entsprechende Kennlinie deaktiviert werden. An ihre Stelle tritt dann eine Blindleistungssteuerung, bei der eine Blindleistung durch einen Parkregler, also eine zentrale Steuerung des Windparks, vorgegeben wird.

Die Spannungsregelungskennlinie 818 zeigt dafür einen möglichen Verlauf der durch den Parkregler vorgegebenen Blindleistung bzw. den entsprechenden Blindstrom, und der resultierenden Spannung. Der Verlauf kann dann entsprechend zum Spannungsregelungsendpunkt 816 führen.

Das Diagramm ist besonders für lokale Netzabschnitte vorgesehen, die als Abschnitt mit lokal hoher Umrichterpenetration verbunden mit einem schwachen Netz charakterisiert werden können. Diese können durch die beschriebene Spannungsregelung, also die beschriebene Blindstromeinspeisung in Abhängigkeit von der Netzspannung, einen Fehler durchfahren. Es müssen nicht unbedingt Fehler sein, aber es betrifft zumindest eine Störung. Ein Störfall umfasst grundsätzlich auch einen Fehlerfall.

Insbesondere wird vorgeschlagen, dass die im Zusammenhang mit Figur 8 erläuterte von der Netzspannung abhängige Blindleistungseinspeisung, die auch zum Durchsteuern eines Fehlerfalls vorgesehen ist, als Regelungsverhalten zum Durchsteuern eines Netzfehlers oder einer Netzstörung verwendet wird. Insbesondere wird ein solches Regelungsverhalten in Abhängigkeit von einer vertikalen Netzlast des lokalen Netzabschnitts oder übergeordneten Netzabschnitts ausgewählt oder eingestellt.

Insbesondere wird vorgeschlagen, für einen Windpark zum Durchsteuern eines Fehlers oder einer Störung eine spannungsabhängige Blindleistungssteuerung für jede Windenergieanlage des Windparks vorzusehen, insbesondere mit unterschiedlichen Kennlinien für die Windenergieanlagen, wobei vor und nach der Störung statt der spannungsabhängigen Blindleistungssteuerung für jede Windenergieanlage, eine von einer Parksteuerung des Windparks zentral gesteuerte Blindleistungssteuerung eingesetzt wird, bei der die Parksteuerung jeder Windenergieanlage des Windparks einen Blindleistungssollwert vorgibt. Ein solches Regelungskonzept, bei dem zwischen der einzelnen Spannungsregelung bzw. Spannungssteuerung an den einzelnen Windenergieanlagen und einer von der Parksteuerung zentral gesteuerten Blindleistungssteuerung gewechselt wird, wird als Spannungskombinationsregelung bezeichnet.

Für die spannungsabhängige Blindleistungssteuerung für jede Windenergieanlage werden vorzugsweise Parameter in Abhängigkeit von der vertikalen Netzlast eingestellt, insbesondere ein Totband und/oder ein Verstärkungsfaktor, der auch als k-Faktor bezeichnet werden kann.

Eine und/oder die beschriebene spannungsabhängige Blindleistungssteuerung für jede Windenergieanlage zum Durchsteuern eines Fehlers oder einer Störung mittels einer Kennlinie, nämlich einer Spannungs-Blindstrom-Kennlinie, kann auch als FRT-Steuerung bezeichnet werden, mit FRT-k-Faktoren und einem FRT-Totband. Die Figur 8 zeigt somit eine FRT-Steuerung.

Das Regelungsverhalten des Diagramms der Figur 8 ist besonders dann vorgesehen, wenn eine Netztrennung bzw. eine topologische Umschaltung im elektrischen Versorgungsnetz als wahrscheinlichstes Szenario angenommen werden kann. Hier wird bei der spannungsabhängigen Blindleistungseinspeisung eine Parametrierung mit Blindleistungspriorisierung vorgeschlagen. Gleichzeitig wird eine Begrenzung des Blindstroms auf 90 % des Umrichterscheinstroms vorgeschlagen. Insoweit wäre die Blindleistungspriorisierung etwas abgeschwächt, nämlich auf diese 90 %. Außerdem wird vorgeschlagen, die Totbänder bei den Anlagen unterschiedlich zu wählen. Die Totbänder sollten im Idealfall bei der Hälfte der Anlagen kleiner sein als bei den übrigen Anlagen und die k-Faktoren sollten groß sein im Vergleich zu den übrigen Anlagen.

Es wurde somit mit der vorliegenden Erfindung erkannt, dass lokale Netzabschnitte unterschiedlich charakterisiert werden können, was nicht nur von dem lokalen Netzabschnitt als solchem abhängt, sondern auch davon, wie oder ob er mit einem elektrischen Versorgungsnetz verbunden ist. In den meisten Fällen ist er mit einem elektrischen Versorgungsnetz verbunden und dann kann für die Charakterisierung zusätzlich eine Rolle spielen, wie besonders ein benachbarter übergeordneter Netzabschnitt ausgebildet ist. Davon abhängig kann das Regelungsverhalten gewählt werden. Zusätzlich können weitere Charakteristika oder Eigenschaften berücksichtigt werden. Dadurch kann besonders eine Zunahme des Anteils regenerativer Erzeuger und damit umrichtergeführter Erzeuger in elektrischen Versorgungsnetzen berücksichtigt werden. Insoweit stellt die Erfindung besonders auf solche lokalen Netzabschnitte ab, die eine hohe Umrichterpenetration aufweisen und schlägt dafür eine gezielte Steuerung bzw. Regelung vor. Diese beinhaltet auch Konzepte für das elektrische Versorgungsnetz insgesamt.

Es wurde erkannt, dass klassische FRT-Strategien eine Reihe von möglichen Parametrierungsmöglichkeiten aufweisen, welche auf einem Arbeitspunkt des Netzes passen. In der Praxis ändert sich der Arbeitspunkt des Netzes aber und die Anforderungen und die Parametrierung sind nicht ideal.

Es wird vorgeschlagen, folgende Parameter in Abhängigkeit des Netzzustandes anzupassen:
- Eine blindleistungspriorisierte Fahrweise oder wirkleistungspriorisierte Fahrweise. Diese kann asymmetrisch, positiv oder negativ sein.
- Eine dynamische Blindstromlimitierung und/oder eine dynamische Wirkleistungslimitierung Auch diese kann asymmetrisch, positiv oder negativ sein.
- Die Größe eines FRT-Totbandes
- FRT-k-Faktoren für Überspannung und/oder Unterspannung.

## Patentansprüche

1. Verfahren zum Einspeisen elektrischer Leistung in ein elektrisches Versorgungsnetz mittels eines umrichtergeführten Einspeisers (100, 112), der mittels wenigstens eines Umrichters elektrische Leistung in das elektrische Versorgungsnetz einspeist, wobei
- der umrichtergeführte Einspeiser an einem Netzanschlusspunkt in einen lokalen Netzabschnitt des elektrischen Versorgungsnetzes einspeist,
- das elektrische Versorgungsnetz
- den umrichtergeführten Einspeiser und weitere Einspeiser aufweist, zum Einspeisen elektrischer Leistung, die als Einspeiseleistung bezeichnet wird, und
- Verbraucher zum Verbrauchen elektrischer Leistung, die als Verbrauchsleistung bezeichnet wird,
- der lokale Netzabschnitt eine hohe Umrichterpenetration aufweist, wobei
- eine Umrichterpenetration ein Verhältnis mittels Umrichter einspeisbarer Leistung zu insgesamt durch alle Einspeiser einspeisbarer Leistung angibt, und
- eine hohe Umrichterpenetration durch einen Wert von wenigstens 50% definiert ist, und
- das Einspeisen der elektrischen Leistung mittels einer Einspeiseregelung erfolgt, die das Einspeisen der elektrischen Leistung in Abhängigkeit von einem Netzzustand des elektrischen Versorgungsnetzes steuert, wobei
- die Einspeiseregelung ein Regelungsverhalten mit einem Ein-/ Ausgangsverhalten aufweist,
- der lokale Netzabschnitt durch eine Netzcharakteristik charakterisiert werden kann, und die Netzcharakteristik von wenigstens einer Eigenschaft des lokalen Netzabschnitts abhängt und zusätzlich
- von wenigstens einer Eigenschaft eines weiteren mit dem lokalen Netzabschnitt verbundenen Netzabschnitts des elektrischen Versorgungsnetzes abhängt, oder
- davon abhängt, dass kein weiterer Netzabschnitt vorhanden ist, und
- das Regelungsverhalten in Abhängigkeit von der Netzcharakteristik des lokalen Netzabschnitts ausgewählt oder eingestellt wird.

2. Verfahren nach Anspruch 1, **dadurch gekennzeichnet, dass** für eine Charakterisierung des lokalen Netzabschnitts zwischen Netzcharakteristika unterschieden werden kann, aus der Liste aufweisend, dass
- der lokale Netzabschnitt als Inselnetz charakterisiert werden kann, wenn
- der lokale Netzabschnitt dem elektrischen Versorgungsnetz entspricht,
- das elektrische Versorgungsnetz ein in sich abgeschlossenes Netz bildet, und
- die Summe der Verbrauchsleistungen aller an das elektrische Versorgungsnetz angeschlossener Verbraucher einen Wert von 5GW nicht überschreitet,
- der lokale Netzabschnitt als Abschnitt mit hoher Umrichterpenetration verbunden mit einem starken Netz charakterisiert werden kann, wenn
- der lokale Netzabschnitt mit einem übergeordneten Netzabschnitt verbunden ist,
- die Summe der Verbrauchsleistungen aller an das elektrische Versorgungsnetz angeschlossenen Verbraucher einen Wert von 5GW überschreitet,
- der übergeordnete Netzabschnitt Teil des elektrischen Versorgungsnetzes ist, und
- der übergeordnete Netzabschnitt einen hohen Schwungmassenindex aufweist, wobei
- ein Schwungmassenindex eines Netzabschnitts ein Verhältnis angibt zwischen
- elektrischer Leistung, die durch direkt gekoppelte Synchrongeneratoren in den Netzabschnitt einspeisbar ist, zu
- insgesamt in den Netzabschnitt einspeisbarer Leistung, und
- ein hoher Schwungmassenindex durch einen Wert definiert wird, der oberhalb eines vorgebbaren Schwungmassenreferenzindex liegt, und/oder dass
- der übergeordnete Netzabschnitt eine Leistungsaustauschkapazität zum lokalen Netzabschnitt aufweist, wobei
- die Leistungsaustauschkapazität ein Verhältnis zwischen maximal zwischen dem übergeordneten Netzabschnitt und dem lokalen Netzabschnitt austauschbarer Leistung in Bezug auf durch alle Einspeiser des lokalen Netzabschnitts einspeisbarer Leistung bezeichnet und
- wenigstens 50% beträgt,
- der lokale Netzabschnitt als Abschnitt mit lokal hoher Umrichterpenetration verbunden mit einem normalen Netz charakterisiert werden kann, wenn
- die umrichtergeführten Einspeiser des lokalen Netzabschnitts mit einem mittleren Kurzschlussstromverhältnis an den lokalen Netzabschnitt angeschlossen sind, das einen Wert von maximal 4, insbesondere maximal 2 aufweist,
- der lokale Netzabschnitt mit einem übergeordneten Netzabschnitt verbunden ist,
- die Summe der Verbrauchsleistungen aller an das elektrische Versorgungsnetz angeschlossenen Verbraucher einen Wert von 5GW überschreitet,
- der übergeordnete Netzabschnitt Teil des elektrischen Versorgungsnetzes ist, und
- der übergeordnete Netzabschnitt einen mittleren bis hohen Schwungmassenindex aufweist, der im Bereich von 20% bis 100% liegt,
- der lokale Netzabschnitt als Abschnitt mit hoher Umrichterpenetration verbunden mit einem Netz mit hoher Umrichterpenetration charakterisiert werden kann, wenn
- der lokale Netzabschnitt mit einem übergeordneten Netzabschnitt verbunden ist,
- die Summe der Verbrauchsleistungen aller an das elektrische Versorgungsnetz angeschlossenen Verbraucher einen Wert von 5GW überschreitet,
- der übergeordnete Netzabschnitt Teil des elektrischen Versorgungsnetzes ist, und
- der übergeordnete Netzabschnitt einen geringen Schwungmassenindex aufweist, wobei
- ein geringer Schwungmassenindex durch einen Wert definiert wird, der unterhalb des vorgebbaren Schwungmassenreferenzindex oder unterhalb eines zweiten Schwungmassenreferenzwertes liegt,
- der lokale Netzabschnitt als Abschnitt mit unbestimmten Verhalten charakterisiert werden kann, wenn keine der vorstehend genannten Charakterisierungen zutreffend sind,
und wobei
- das Regelungsverhalten in Abhängigkeit von den vorstehenden Netzcharakteristika ausgewählt oder eingestellt wird.

3. Verfahren nach Anspruch 1 oder 2, **dadurch gekennzeichnet, dass** das Regelungsverhalten zusätzlich
- in Abhängigkeit von einem Netzzustand des elektrischen Versorgungsnetzes ausgewählt oder eingestellt wird, und/oder
- in Abhängigkeit von einem aktuellen Umrichtereinspeiseanteil des lokalen Netzabschnitts ausgewählt oder eingestellt wird, wobei
- ein Umrichtereinspeiseanteil ein Verhältnis mittels Umrichter des lokalen Netzabschnitts eingespeister Leistung zu insgesamt durch alle Einspeiser des lokalen Netzabschnitts eingespeister Leistung angibt.

4. Verfahren nach einem der vorstehenden Ansprüche, **dadurch gekennzeichnet, dass**
das Regelungsverhalten der Einspeiseregelung in Abhängigkeit von einer vertikalen Netzlast des lokalen Netzabschnitts oder übergeordneten Netzabschnitts ausgewählt oder eingestellt wird, wobei die vertikale Netzlast eine vorzeichenrichtige Summe aller Leistungsübertragungen aus einem mit dem Netzabschnitt verbundenen Übertragungsnetz über direkt angeschlossene Transformatoren ist.

5. Verfahren nach einem der vorstehenden Ansprüche, **dadurch gekennzeichnet, dass**
das Regelungsverhalten der Einspeiseregelung in Abhängigkeit von einer Spannungsweichheit des lokalen Netzabschnitts oder übergeordneten Netzabschnitts eingestellt wird,
wobei die Spannungsweichheit definiert ist durch einen Kehrwert eines Quotienten zwischen
- einem Wert einer relativen Blindleistungsänderung als Änderung insgesamt in den lokalen Netzabschnitt eingespeister Blindleistung, bezogen auf maximal in diesen Netzabschnitt einspeisbarer Blindleistung, und
- einem Wert einer aus dieser Änderung der eingespeisten Blindleistung resultierenden relativen Spannungsänderung an einem Referenzpunkt des lokalen Netzabschnitts.

6. Verfahren nach einem der vorstehenden Ansprüche, **dadurch gekennzeichnet, dass**
das Regelungsverhalten der Einspeiseregelung in Abhängigkeit von einer Frequenzweichheit des lokalen Netzabschnitts oder übergeordneten Netzabschnitts eingestellt wird, wobei die Frequenzweichheit definiert ist durch einen Kehrwert eines Quotienten zwischen einem Wert einer relativen, insbesondere prozentualen, Änderung insgesamt in den lokalen Netzabschnitt eingespeister Wirkleistung und der aus dieser Änderung der eingespeisten Wirkleistung resultierenden Frequenzänderungsgeschwindigkeit in dem Netzabschnitt.

7. Verfahren nach einem der vorstehenden Ansprüche, **dadurch gekennzeichnet, dass** das Regelungsverhalten der Einspeiseregelung in Abhängigkeit von einem erneuerbaren Kapazitätsfaktor des lokalen Netzabschnitts oder übergeordneten Netzabschnitts eingestellt wird, wobei der erneuerbare Kapazitätsfaktor definiert ist durch einen Quotienten zwischen
- insgesamt durch alle in den lokalen Netzabschnitt bzw. übergeordneten Netzabschnitt einspeisender Energiequellen fluktuierender Leistung, insbesondere aller Windenergieanlagen und Photovoltaikanlagen, eingespeister Leistung, insbesondere Wirkleistung, und
- maximal durch alle diese Energiequellen fluktuierender Leistung einspeisbarer Leistung, die sich insbesondere als Summe aller Nennleistungswerte dieser Energiequellen fluktuierender Leistung berechnet.

8. Verfahren nach einem der vorstehenden Ansprüche, **dadurch gekennzeichnet, dass**
das Regelungsverhalten der Einspeiseregelung wenigstens eine Regelungseigenschaft aufweist aus der Liste aufweisend:
- eine Auswahlmöglichkeit zwischen blindleistungspriorisierter Fahrweise und wirkleistungspriorisierter Fahrweise, wobei
- bei der blindleistungspriorisierten Fahrweise zur Einhaltung einer Scheinleistungsgrenze eingespeiste Wirkleistung begrenzt wird, wohingegen
- bei der wirkleistungspriorisierten Fahrweise zum Einhalten einer Scheinleistungsgrenze eingespeiste Blindleistung begrenzt wird,
- eine Einstellmöglichkeit zwischen einem Anteil einer Blindleistungslimitierung und einem Anteil einer Wirkleistungslimitierung bei Erreichen einer Scheinleistungsgrenze,
- eine Einstellmöglichkeit eines Spannungstotbandes, wobei das Spannungstotband einen Spannungsbereich um eine Netznennspannung angibt, in dem eine zusätzliche Blindleistungseinspeisung zur Spannungsstützung unterbleibt, und
- einstellbare Verstärkungsfaktoren zur Spannungsstützung, wobei die Verstärkungsfaktoren ein Verhältnis einer vorzunehmenden Blindleistungsänderung zu einer erfassten Spannungsänderung angeben.

9. Windenergiesystem mit wenigstens einer Windenergieanlage
zum Einspeisen elektrischer Leistung in ein elektrisches Versorgungsnetz, wobei das Windenergiesystem einen umrichtergeführten Einspeiser (100, 112) bildet, der mittels wenigstens eines Umrichters elektrische Leistung in das elektrische Versorgungsnetz einspeist, wobei
- der umrichtergeführte Einspeiser an einem Netzanschlusspunkt in einen lokalen Netzabschnitt des elektrischen Versorgungsnetzes einspeist,
- das elektrische Versorgungsnetz
- den umrichtergeführten Einspeiser und weitere Einspeiser aufweist, zum Einspeisen elektrischer Leistung, die als Einspeiseleistung bezeichnet wird, und
- Verbraucher zum Verbrauchen elektrischer Leistung, die als Verbrauchsleistung bezeichnet wird,
- der lokale Netzabschnitt eine hohe Umrichterpenetration aufweist, wobei
- eine Umrichterpenetration ein Verhältnis mittels Umrichter einspeisbarer Leistung zu insgesamt durch alle Einspeiser einspeisbarer Leistung angibt, und
- eine hohe Umrichterpenetration durch einen Wert von wenigstens 50% definiert ist, und
- eine Einspeiseregelung vorgesehen ist, und das Einspeisen der elektrischen Leistung mittels der Einspeiseregelung erfolgt, die das Einspeisen der elektrischen Leistung in Abhängigkeit von einem Netzzustand des elektrischen Versorgungsnetzes steuert, wobei
- die Einspeiseregelung ein Reglerverhalten aufweist, das ein Ein-/ Ausgangsverhalten der Einspeiseregelung kennzeichnet,
- der lokale Netzabschnitt durch eine Netzcharakteristik charakterisiert werden kann, und die Netzcharakteristik von wenigstens einer Eigenschaft des lokalen Netzabschnitts abhängt und zusätzlich
- von wenigstens einer Eigenschaft eines weiteren mit dem lokalen Netzabschnitt verbundenen Netzabschnitts des elektrischen Versorgungsnetzes abhängt, oder
- davon abhängt, dass kein weiterer Netzabschnitt vorhanden ist, und
- das Regelungsverhalten in Abhängigkeit von der Netzcharakteristik des lokalen Netzabschnitts ausgewählt oder eingestellt wird.

10. Windenergiesystem nach Anspruch 9, **dadurch gekennzeichnet, dass** das Windenergiesystem, insbesondere die Einspeiseregelung, und/oder eine Steuereinheit des Windenergiesystems, dazu vorbereitet ist, ein Verfahren nach einem der Ansprüche 1 bis 8 auszuführen.
